# EUROPÄISCHE PATENTSCHRIFT

(11) **EP 2 381 770 B1**
(45) Veröffentlichungstag und Bekanntmachung des Hinweises auf die Patenterteilung: **30.03.2016**
(21) Anmeldenummer: 09798928.9
(22) Anmeldetag: 22.12.2009
(51) Int. Cl.: A01N 25/04, A01N 25/22, A01N 37/50, A01N 43/653, A01P 3/00

(54) **LAGERSTABILE GELFORMULIERUNG MIT WENIGSTENS ZWEI IM WESENTLICHEN UNVERMISCHTEN HYDROGELEN**
GEL FORMULA WHICH CAN BE STORED SAFELY FOR A LONG PERIOD WITH AT LEAST TWO ESSENTIALLY UNMIXED HYDROGELS
FORMULES DE GEL STABLES AU STOCKAGE DOTÉES D'AU MOINS DEUX HYDROGELS ESSENTIELLEMENT NON MÉLANGÉS

(30) Priorität: 23.12.2008 EP 08172837
(43) Veröffentlichungstag der Anmeldung: 02.11.2011
(73) Patentinhaber: BASF SE, 67056 Ludwigshafen (DE)
(72) Erfinder: SOWA, Christian, 67435 Neustadt (DE); ANNAWALD, Marcus, 67105 Schifferstadt (DE)
(86) Internationale Anmeldenummer: PCT/EP2009/067773
(87) Internationale Veröffentlichungsnummer: WO 2010/072777

(56) Entgegenhaltungen:
- EP-A1- 0 225 287
- WO-A1-95/07614
- WO-A1-03/055304
- WO-A2-99/39685
- US-A- 5 323 906

## Beschreibung

Die vorliegende Anmeldung betrifft eine lagerstabile Gelformulierung mit wenigstens zwei im Wesentlichen unvermischten Hydrogelen, wobei jedes Hydrogel wenigstens einen elektrolytempfindlichen Verdicker enthält. Außerdem enthält eines der Hydrogele (Phase A) wenigstens einen Stoff A, der mit wenigstens einem der Stoffe B, die in einem weiteren Hydrogel (Phase B) enthalten sind, nicht bzw. nicht in den Mengen, in denen diese Stoffe in der Gelformulierung enthalten sind, kompatibel ist.

Flüssige Produktformulierungen, wie Lösungen, Suspensionen oder Emulsionen, besitzen gegenüber pulverförmigen Darreichungen eine Reihe von Vorteilen, beispielsweise keine Staubentwicklung, verbesserte Benetzungseigenschaften und in der Regel eine bessere Dosierbarkeit.

Eine ausreichend gute Lagerstabilität ist jedoch bei vielen Flüssigformulierungen insbesondere bei Lagerung über längere Zeiträume im Vergleich zu den entsprechenden Feststoffformulierungen schwieriger zu erreichen. So kommt es häufig zu Sedimentbildung, Agglomeration, Kristallisation und/oder Synärese (Absetzen flüssiger Formulierungsbestandteile).

Diese Phänomene sind meist auf Unverträglichkeiten von Komponenten der Formulierung untereinander zurückzuführen, so auf die Unverträglichkeit mehrerer Wirkstoffe miteinander oder eines Wirkstoffs mit einem Hilfsmittel, beispielsweise mit einem Netzmittel.

In der Regel werden diese Probleme gelöst, indem man beispielsweise für den jeweiligen Wirkstoff kompatiblere Hilfsmittel aussucht oder mehrere Wirkstoffe getrennt formuliert. Die Suche nach kompatiblen Formulierungskomponenten ist jedoch sehr aufwändig und muss für jeden einzelnen Wirkstoff individuell durchgeführt werden. Auch die getrennte Formulierung verschiedener Wirkstoffe ist aus Vermarktungsgründen nicht vorteilhaft.

EP-A-0225287 beschreibt lagerstabile wässrige Präparate von in Wasser unlöslichen oder schwerlöslichen Feststoffen, die ein elektrolytempfindliches synthetisches Verdickungsmittel enthalten. In diesem System kommen jedoch keine Komponenten zum Einsatz, die miteinander nicht verträglich sind.

US 5323906 offenbart ein Verpackungssystem mit wasserlöslichen Beuteln, die für nicht kompatiblen Agrochemikalien verwendet werden.

Aufgabe der vorliegenden Erfindung war es daher, eine bei der Anwendung flüssige Produktformulierung bereitzustellen, welche die Nachteile der bekannten Flüssigformulierungen nicht aufweist und insbesondere zu keinen Kompatibilitätsproblemen der in ihr enthaltenen Bestandteile führt.

Die Aufgabe wird durch eine lagerstabile Gelformulierung mit wenigstens zwei im Wesentlichen unvermischten Hydrogelen gelöst.

Gegenstand der Erfindung ist damit eine lagerstabile Gelformulierung mit wenigstens zwei im Wesentlichen unvermischten Hydrogelen, enthaltend in jedem Hydrogel wenigstens einen elektrolytempfindlichen, bevorzugt synthetischen, Verdicker, ferner enthaltend in einem der Hydrogele wenigstens einen Stoff A und in einem weiteren Hydrogel wenigstens einen Stoff B, wobei wenigstens einer der Stoffe A mit wenigstens einem der Stoffe B in den in der Gelformulierung enthaltenen Mengen (oder anders ausgedrückt: in den in der jeweiligen Phase enthaltenen Mengen) nicht verträglich ist.

"Nicht verträglich" bezieht sich dabei selbstverständlich auf eine Unverträglichkeit, die dann auftritt, wenn die miteinander inkompatiblen Stoffe A und B gemeinsam formuliert sind und beispielsweise als Gemisch in einer Flüssigformulierung vorliegen; in der erfindungsgemäßen Gelformulierung liegt diese Unverträglichkeit natürlich nicht vor oder sie tritt zumindest während einer signifikant längeren Zeitspanne nicht auf als dies bei einer gemeinsamen Formulierung der inkompatiblen Stoffe der Fall wäre.

Das Hydrogel, das den wenigstens einen Stoff A umfasst, wird im Folgenden auch als Phase A bezeichnet; analog wird das Hydrogel, das den wenigstens einen Stoff B umfasst, im Folgenden auch als Phase B bezeichnet, auch wenn es sich nicht zwingend um Phasen im thermodynamischen Sinn handelt.

Eine Gelformulierung ist eine gelförmige Zubereitung eines Wirkstoffs beliebiger Natur. Ein Gel ist ein formbeständiges, leicht deformierbares, an Flüssigkeiten und Gasen reiches, feindisperses, kolloidales System aus mindestens zwei Komponenten, die zumeist einen festen, kolloid zerteilten Stoff mit langen oder stark verzweigten Teilchen (Geliermittel; auch als Verdickungsmittel oder Verdicker bezeichnet) und eine Flüssigkeit (meist Wasser) als Dispersionsmittel umfassen. Dabei ist die feste Substanz kohärent, d.h. sie bildet im Dispersionsmittel ein schwammartiges dreidimensionales Netzwerk, wobei die Teilchen an verschiedenen Punkten (Haftpunkte) aneinanderhaften. Die Poren der kohärenten Phase sind durch eine Flüssigkeit ("Lyogel"; im Fall von Wasser: "Hydrogel") ausgefüllt. Beide Phasen durchdringen sich dabei vollständig (bikohärent). Ist die Flüssigkeit des Gels verlorengegangen, so dass die disperse Phase durch ein Gas gebildet wird, spricht man von Xerogelen; diese haben natürlich eine veränderte räumliche Anordnung des Netzes mit wesentlich geringeren Abständen zwischen den Strukturelementen und bilden einen Grenzzustand zum Festkörper. Gele können auch als viskoelastische Fluide beschrieben werden; ihre Fluideigenschaften liegen zwischen der einer idealen Flüssigkeit und der eines idealen Feststoffkörpers.

Die erfindungsgemäße Gelformulierung umfasst wenigstens zwei Hydrogele. Unter Hydrogelen versteht man im Rahmen der vorliegenden Erfindung solche Gele, die wenigstens 5 Gew.-% Wasser, vorzugsweise wenigstens 10 Gew.-% und insbesondere wenigstens 15 Gew.-% Wasser, bezogen auf das Gesamtgewicht des Gels, enthalten. Der Begriff "Hydrogel" schließt jedoch nicht aus, dass dieses auch andere Flüssigkeiten, beispielsweise organische Lösungsmittel oder flüssige Wirk- oder Hilfsstoffe, enthält.

Die erfindungsgemäße Gelformulierung kann vor ihrer eigentlichen Anwendung durch Einrühren einer kleinen Menge eines Elektrolyts wieder verflüssigt werden (d.h. sie wird durch Elektrolytzusatz in eine Flüssigformulierung überführt) und ist dann gebrauchsfertig.

Die nachfolgend gemachten Angaben zu geeigneten und bevorzugten Ausführungsformen und Eigenschaften der erfindungsgemäßen Gelformulierung, insbesondere der Komponenten A und B, der Verdicker und gegebenenfalls vorhandener weiterer Bestandteile, des Elektrolyts und dergleichen, gelten sowohl allein für sich genommen als auch insbesondere in jeder denkbaren Kombination miteinander.

Die in der erfindungsgemäßen Gelformulierung enthaltenen Hydrogele können miteinander in Kontakt stehen, d.h. sich berührende Phasengrenzflächen besitzen; sie können aber auch physikalisch getrennt sein, beispielsweise durch eine Trennfolie oder eine Trennwand. Bei mehr als zwei Hydrogelen ist deren relative Anordnung beliebig; so können die wenigstens drei Hydrogele schichtförmig, polygonal, konzentrisch, etc. angeordnet sein.

Bevorzugt stehen die in der erfindungsgemäßen Gelformulierung enthaltenen Hydrogele miteinander in Kontakt, d.h. besitzen wenigstens eine sich berührende Phasengrenzfläche. Bei "n" Hydrogelen liegen vorzugsweise wenigstens "n-1" Phasengrenzflächen vor.

Erfindungswesentlich ist, dass die in der erfindungsgemäßen Gelformulierung enthaltenen Hydrogele im Wesentlichen nicht miteinander vermischt sind. Das bedeutet, dass die Phasengrenzflächen zwischen den einzelnen Gelen so stabil sind, dass die nicht miteinander verträglichen Stoffe über einen längeren Zeitraum nicht zueinander diffundieren. Genauer gesagt sind die Hydrogele von einer solchen Beschaffenheit, dass innerhalb von 4 Wochen bei 20 °C höchstens 5 Gew.-%, bevorzugt höchstens 2 Gew.-% und insbesondere höchstens 1 Gew.-% des in Phase A enthaltenen wenigstens einen Stoffs A, der mit dem wenigstens einen Stoff B aus Phase B nicht kompatibel ist bzw. nicht in den Mengen kompatibel ist, in denen sie jeweils in den Phasen A und B enthalten sind, in Phase B diffundieren und umgekehrt höchstens 5 Gew.-%, bevorzugt höchstens 2 Gew.-% und insbesondere höchstens 1 Gew.-% des in Phase B enthaltenen wenigstens einen Stoffs B, der mit dem wenigstens einen Stoff A aus Phase A nicht kompatibel ist bzw. nicht in den Mengen kompatibel ist, in denen sie jeweils in den Phasen A und B enthalten sind, in Phase A diffundieren.

Die in der erfindungsgemäßen Gelformulierung enthaltenen Hydrogele sind formstabil. Vorzugsweise besitzen sie eine Viskosität von wenigstens 1000 mPa·s, z.B. von 1000 bis 10⁶ mPa·s oder vorzugsweise von 1000 bis 10⁵ mPa·s oder insbesondere von 1000 bis 10⁴ mPa·s; besonders bevorzugt von wenigstens 3000 mPa·s, z.B. von 3000 bis 10⁶ mPa·s oder vorzugsweise von 3000 bis 10⁵ mPa·s oder insbesondere von 3000 bis 10⁴ mPa·s; stärker bevorzugt von wenigstens 4000 mPa·s, z.B. von 4000 bis 10⁶ mPa·s oder vorzugsweise von 4000 bis 10⁵ mPa·s oder insbesondere von 4000 bis 10⁴ mPa·s, und insbesondere von wenigstens 5000 mPa·s, z.B. von 5000 bis 10⁶ mPa·s oder vorzugsweise von 5000 bis 10⁵ mPa·s oder insbesondere von 5000 bis 10⁴ mPa·s.

Die im Rahmen der vorliegenden Erfindung gemachten Angaben zur Viskosität beziehen sich auf Werte wie sie mit einem Brookfield-Viskosimeter (1,5 rpm, Sp 63) bei einer Temperatur von 25 °C erhalten werden.

Die mangelnde Verträglichkeit oder Inkompatibilität des wenigstens einen Stoffs A mit dem wenigstens einen Stoff B kann sich unterschiedlich äußern. Als Unverträglichkeit oder Inkompatibilität wird grundsätzlich jede chemisch oder physikochemisch verursachte Wirkungsminderung oder Minderung der praktischen Anwendbarkeit bezeichnet. So kann eine Unverträglichkeit bedeuten, dass die Stoffe A und B miteinander zu unerwünschten oder weniger wirksamen Produkten reagieren. Auch kann Stoff A eine Veränderung des Stoffs B, beispielsweise eine Zersetzung oder eine Umsetzung mit einer weiteren Komponente der Formulierung, fördern, beispielsweise katalytisch, oder vice versa. Eine Unverträglichkeit kann sich aber auch darin äußern, dass Stoff A eine verstärkte Präzipitation bzw. Kristallisation des Stoffs B oder vice versa im Dispersionsmedium, das der Gelformulierung zugrunde liegt, bewirkt. Eine Unverträglichkeit kann ferner dazu führen, dass sich die gewünschte Flüssigformulierung entmischt.

Unter Präzipitation versteht man im Rahmen der vorliegenden Erfindung sowohl den Übergang eines Stoffes aus dem gelösten in den festen Zustand (beispielsweise durch Fällung, z.B. durch Kristallisation) als auch den Übergang aus einem feindispersen Zustand (z.B. Emulsion, Suspension, Suspoemulsion) in einen gröberdispersen Zustand, der mit dem Auge sichtbar ist oder zumindest von einer solchen Größenordnung ist, dass er bei der geplanten Anwendung der Formulierung stört, beispielsweise weil das Präzipitat Düsen oder Filter verstopft.

Unter Ostwald-Reifung versteht man das Wachsen größerer Kristalle auf Kosten der kleineren in ihrer gesättigten oder übersättigten Lösung. Dadurch verschwinden die kleineren Partikel allmählich und die Dispersion verändert ihre Teilchengrößenverteilung zu einer einheitlichen Größe hin. Nachteil der Ostwald-Reifung ist die Bildung großer Kristalle, die bei gewissen Anwendungen stören können, weil sie beispielsweise Düsen oder Filter verstopfen können.

Bevorzugt dient die erfindungsgemäße Gelformulierung dazu zu verhindern, dass wenigstens einer der Stoffe A nach einer gewissen Zeit die Präzipitation wenigstens eines Teils wenigstens eines der Stoffe B bewirkt oder dass wenigstens einer der Stoffe B nach einer gewissen Zeit die Präzipitation wenigstens eines Teils wenigstens eines der Stoffe A bewirkt oder dass der wenigstens eine Stoff A und der wenigstens eine Stoff B sich nach einer gewissen Zeit gegenseitig wenigstens teilweise zur Präzipitation bringen. "Nach einer gewissen Zeit" bedeutet, dass die Präzipitation nicht schlagartig nach dem Vermischen der Stoffe A und B einsetzen muss, sondern auch nach einer gewissen Lagerdauer, z.B. nach einigen Stunden oder Tagen. Bevorzugt bedeutet "nach einer gewissen Zeit" in diesem Zusammenhang, dass wenigstens einer der Stoffe A spätestens nach 4 Wochen, vorzugsweise spätestens nach 2 Wochen nach dem gemeinsamen Formulieren der Stoffe A und B in einer Flüssigformulierung die Präzipitation wenigstens eines Teils wenigstens eines der Stoffe B bewirken würde oder dass wenigstens einer der Stoffe B spätestens nach 4 Wochen, vorzugsweise spätestens nach 2 Wochen nach gemeinsamem Formulieren der Stoffe A und B in einer Flüssigformulierung die Präzipitation wenigstens eines der Stoffe A bewirken würde oder dass der wenigstens eine Stoff A und der wenigstens eine Stoff B sich spätestens nach 4 Wochen, vorzugsweise spätestens nach 2 Wochen nach gemeinsamem Formulieren der Stoffe A und B in einer Flüssigformulierung wenigstens teilweise gegenseitig zur Präzipitation bringen würden. "Wenigstens zum Teil zur Präzipitation bringen" bedeutet, dass ein so großer Teil des Stoffes A oder des Stoffes B oder beider Stoffe präzipitiert ist, dass es bei der weiteren Anwendung stört, beispielsweise weil es zur Verstopfung irgendwelcher Düsen führt, durch die die Formulierung geführt wird, oder dass der Wirkstoff seine Wirkung nicht mehr ausreichend entfalten kann.

Anders ausgedrückt betrifft eine bevorzugte Ausführungsform der Erfindung eine lagerstabile Gelformulierung, umfassend wenigstens zwei im Wesentlichen unvermischte Hydrogele, enthaltend in jedem Hydrogel wenigstens einen elektrolytempfindlichen Verdicker, ferner enthaltend in einem der Hydrogele (Phase A) wenigstens einen Stoff A und in einem weiteren Hydrogel (Phase B) wenigstens einen Stoff B, wobei wenigstens einer der Stoffe A in einer fiktiven Flüssigformulierung, beispielsweise in einer Flüssigformulierung, die der erfindungsgemäßen Gelformulierung oder einem ihrer Hydrogele zugrunde liegt, oder in einer Flüssigformulierung, die durch Zusatz wenigstens eines Elektrolyts zur erfindungsgemäßen Gelformulierung entsteht, nach einer gewissen Zeit die Präzipitation wenigstens eines Teils wenigstens eines der Stoffe B bewirken würde; oder wenigstens einer der Stoffe B in einer fiktiven Flüssigformulierung, beispielsweise in einer Flüssigformulierung, die der erfindungsgemäßen Gelformulierung oder einem ihrer Hydrogele zugrunde liegt, oder in einer Flüssigformulierung, die durch Zusatz wenigstens eines Elektrolyts zur erfindungsgemäßen Gelformulierung entsteht, nach einer gewissen Zeit die Präzipitation wenigstens eines Teils wenigstens eines der Stoffe A bewirken würde; oder sich die Stoffe A und B in einer fiktiven Flüssigformulierung, beispielsweise in einer Flüssigformulierung, die der erfindungsgemäßen Gelformulierung oder einem ihrer Hydrogele zugrunde liegt, oder in einer Flüssigformulierung, die durch Zusatz wenigstens eines Elektrolyts zur erfindungsgemäßen Gelformulierung entsteht, nach einer gewissen Zeit wenigstens teilweise gegenseitig zur Präzipitation bringen würden.

Alternativ dient die erfindungsgemäße Gelformulierung bevorzugt dazu zu verhindern, dass wenigstens einer der Stoffe A nach einer gewissen Zeit das Kristallwachstum (Ostwald Reifung) wenigstens eines Teils wenigstens eines der Stoffe B fördert/bewirkt oder dass wenigstens einer der Stoffe B nach einer gewissen Zeit das Kristallwachstum (Ostwald Reifung) wenigstens eines Teils wenigstens eines der Stoffe A fördert/bewirkt. "Nach einer gewissen Zeit" bedeutet, dass die Ostwald-Reifung nicht schlagartig nach dem Vermischen der Stoffe A und B einsetzen muss, sondern auch nach einer gewissen Lagerdauer, z.B. nach einigen Stunden oder Tagen. Bevorzugt bedeutet "nach einer gewissen Zeit" in diesem Zusammenhang, dass wenigstens einer der Stoffe A spätestens nach 4 Wochen, vorzugsweise spätestens nach 2 Wochen nach dem gemeinsamen Formulieren der Stoffe A und B in einer Flüssigformulierung das Kristallwachstum (Ostwald Reifung) wenigstens eines Teils wenigstens eines der Stoffe B bewirken würde oder dass wenigstens einer der Stoffe B spätestens nach 4 Wochen, vorzugsweise spätestens nach 2 Wochen nach gemeinsamem Formulieren der Stoffe A und B in einer Flüssigformulierung das Kristallwachstum (Ostwald Reifung) wenigstens eines der Stoffe A bewirken würde. "Das Kristallwachstum (Ostwaldreifung) wenigstens eines Teils wenigstens eines der Stoffe bewirken" bedeutet dabei vorzugsweise, dass ein so großer Teil des Stoffes A oder des Stoffes B präzipitiert ist bzw. die Kristalle eine solche Größe angenommen haben, dass es bei der weiteren Anwendung stört, beispielsweise weil es zur Verstopfung irgendwelcher Düsen führt, durch die die Formulierung geführt wird, oder dass der Wirkstoff seine Wirkung nicht mehr ausreichend entfalten kann.

Anders ausgedrückt betrifft eine bevorzugte Ausführungsform der Erfindung eine lagerstabile Gelformulierung, umfassend wenigstens zwei im Wesentlichen unvermischte Hydrogele, enthaltend in jedem Hydrogel wenigstens einen elektrolytempfindlichen Verdicker, ferner enthaltend in einem der Hydrogele (Phase A) wenigstens einen Stoff A und in einem weiteren Hydrogel (Phase B) wenigstens einen Stoff B, wobei wenigstens einer der Stoffe A in einer fiktiven Flüssigformulierung, beispielsweise in einer Flüssigformulierung, die der erfindungsgemäßen Gelformulierung oder einem ihrer Hydrogele zugrunde liegt, oder in einer Flüssigformulierung, die durch Zusatz wenigstens eines Elektrolyts zur erfindungsgemäßen Gelformulierung entsteht, nach einer gewissen Zeit das Kristallwachstum (Ostwald Reifung) wenigstens eines Teils wenigstens eines der Stoffe B bewirken würde; oder wenigstens einer der Stoffe B in einer fiktiven Flüssigformulierung, beispielsweise in einer Flüssigformulierung, die der erfindungsgemäßen Gelformulierung oder einem ihrer Hydrogele zugrunde liegt, oder in einer Flüssigformulierung, die durch Zusatz wenigstens eines Elektrolyts zur erfindungsgemäßen Gelformulierung entsteht, nach einer gewissen Zeit das Kristallwachstum (Ostwald Reifung) wenigstens eines Teils wenigstens eines der Stoffe A bewirken würde.

Bezüglich der Ausdrücke "nach einer gewissen Zeit" und "wenigstens zum Teil das Kristallwachstum (Ostwald-Reifung) bewirken" gilt das zuvor Gesagte.

So erhöht beispielsweise bei der Ostwald-Reifung wenigstens einer der Stoffe A die Wasserlöslichkeit der feindispersen Teilchen einer wässrigen Dispersion des wenigstens einen Stoffes B, die 5 bis 100 Gew.-% Wasser enthält, wobei gleichzeitig die gröber dispersen Teilchen wachsen; und/oder wenigstens einer der Stoffe B erhöht die Wasserlöslichkeit der feindispersen Teilchen einer wässrigen Dispersion des wenigstens einen Stoffes A, die 5 bis 100 Gew.-% Wasser enthält, wobei gleichzeitig die gröber dispersen Teilchen wachsen.

In einer bevorzugten Ausführungsform ist wenigstens einer der Stoffe A und/oder wenigstens einer der Stoffe B in Wasser schwerlöslich. "In Wasser schwer löslich" bedeutet dabei, dass höchstens 5 g, vorzugsweise höchstens 2 g und insbesondere höchstens 1 g des Stoffes in 1 I Wasser unter Normalbedingungen (T = 25 °C +/- 20 %, p = 101325 Pascal +/- 20 %) löslich sind.

Eine besonders bevorzugte Ausführungsform der Erfindung betrifft eine lagerstabile Gelformulierung umfassend wenigstens zwei im Wesentlichen unvermischte Hydrogele, enthaltend in jedem Hydrogel wenigstens einen elektrolytempfindlichen Verdicker, ferner enthaltend in einem der Hydrogele (Phase A) wenigstens einen Stoff A und in einem weiteren Hydrogel (Phase B) wenigstens einen Stoff B, wobei der wenigstens eine Stoff A und der wenigstens eine Stoff B so beschaffen sind, dass bei gemeinsamer Formulierung (d.h. A und B liegen im Gemisch in einer Phase vor) wenigstens einer der Stoffe A die Präzipitation wenigstens eines der Stoffe B in einer wässrigen Dispersion, die 5 bis 100 Gew.-% Wasser enthält, fördern würde, und/oder wenigstens einer der Stoffe B die die Präzipitation wenigstens eines der Stoffe A in einer wässrigen Dispersion, die 5 bis 100 Gew.-% Wasser enthält, fördern würde.

Eine besonders bevorzugte Ausführungsform der Erfindung betrifft außerdem eine lagerstabile Gelformulierung umfassend wenigstens zwei im Wesentlichen unvermischte Hydrogele, enthaltend in jedem Hydrogel wenigstens einen elektrolytempfindlichen Verdicker, ferner enthaltend in einem der Hydrogele (Phase A) wenigstens einen Stoff A und in einem weiteren Hydrogel (Phase B) wenigstens einen Stoff B, wobei der wenigstens eine Stoff A und der wenigstens eine Stoff B so beschaffen sind, dass bei gemeinsamer Formulierung (d.h. A und B liegen im Gemisch in einer Phase vor) wenigstens einer der Stoffe A das Kristallwachstum (Ostwald-Reifung) wenigstens eines der Stoffe B in einer wässrigen Dispersion, die 5 bis 100 Gew.-% Wasser enthält, fördern würde, und/oder wenigstens einer der Stoffe B das Kristallwachstum (Ostwaldreifung) wenigstens eines der Stoffe A in einer wässrigen Dispersion, die 5 bis 100 Gew.-% Wasser enthält, fördern würde.

Ein stärker bevorzugter Gegenstand der Erfindung betrifft eine lagerstabile Gelformulierung umfassend wenigstens zwei im Wesentlichen unvermischte Hydrogele, enthaltend in jedem Hydrogel wenigstens einen elektrolytempfindlichen Verdicker, ferner enthaltend in einem der Hydrogele (Phase A) wenigstens einen Stoff A und in einem weiteren Hydrogel (Phase B) wenigstens einen Stoff B, wobei der wenigstens eine Stoff A und der wenigstens eine Stoff B so beschaffen sind, dass bei gemeinsamer Formulierung (d.h. A und B liegen im Gemisch in einer Phase vor) wenigstens einer der Stoffe A die Wasserlöslichkeit wenigstens eines der Stoffe B herabsetzen würde und/oder wenigstens einer der Stoffe B die Wasserlöslichkeit wenigstens eines der Stoffe A herabsetzen würde.

In einer noch stärker bevorzugten Ausführungsform der Erfindung enthält Phase A wenigstens ein im Wesentlichen wasserunlösliches Pflanzenschutzmittel und gegebenenfalls wenigstens ein Dispergiermittel. Bevorzugt enthält dabei Phase B ein vom Pflanzenschutzmittel der Phase A verschiedenes Pflanzenschutzmittel und/oder ein Adjuvans. Dabei ist das Pflanzenschutzmittel der Phase A mit dem Pflanzenschutzmittel der Phase B und/oder mit dem Adjuvans der Phase B nicht oder zumindest nicht mit den in der Gelformulierung in den Phasen A und B jeweils enthaltenen Mengen verträglich.

In einer besonderen Ausführungsform der Erfindung ist Phase A ein mit dem wenigstens einen elektrolytempfindlichen Verdicker verdicktes Suspensionskonzentrat (SC) oder eine mit dem wenigstens einen elektrolytempfindlichen Verdicker verdickte Suspoemulsion (SE) oder eine mit dem wenigstens einen elektrolytempfindlichen Verdicker verdickte wässrige Emulsion (EW), das/die vorzugsweise wenigstens ein Pflanzenschutzmittel umfasst, und Phase B ist ebenfalls ein mit dem wenigstens einen elektrolytempfindlichen Verdicker verdicktes Suspensionskonzentrat (SC) oder eine mit dem wenigstens einen elektrolytempfindlichen Verdicker verdickte Suspoemulsion (SE) oder eine mit dem wenigstens einen elektrolytempfindlichen Verdicker verdickte wässrige Emulsion (EW), das/die vorzugsweise wenigstens ein Pflanzenschutzmittel umfasst, oder Phase B ist eine mit dem wenigstens einen elektrolytempfindlichen Verdicker verdickte wässrige Lösung oder Emulsion, die wenigstens ein Adjuvans umfasst.

Bei den Pflanzenschutzmitteln kann es sich um alle gängigen Klassen handeln, beispielsweise um Herbizide, Fungizide, Insektizide, Akarizide, Nematizide, Bakterizide, Wachstumsregulatoren und dergleichen.

### Beispiele für Fungizide sind:

Strobilurine
   Azoxystrobin, Dimoxystrobin, Enestroburin, Fluoxastrobin, Kresoxim-methyl, Metominostrobin, Orysastrobin, Picoxystrobin, Pyraclostrobin, Pyribencarb, Trifloxystrobin, 2-(2-(6-(3-Chlor-2-methyl-phenoxy)-5-fluor-pyrimidin-4-yloxy)-phenyl)-2-methoxyimino-N-methyl-acetamid, 2-(ortho-((2,5-Dimethylphenyl-oxymethylen)phenyl)-3-methoxy-acrylsäuremethylester, 3-Methoxy-2-(2-(N-(4-methoxy-phenyl)-cyclopropancarboximidoylsulfanylmethyl)-phenyl)-acrylsäuremethylester;
Carbonsäureamide
   - Carbonsäureanilide: Benalaxyl, Benalaxyl-M, Benodanil, Bixafen, Boscalid, Carboxin, Fenfuram, Fenhexamid, Flutolanil, Furametpyr, Isotianil, Kiralaxyl, Mepronil, Metalaxyl, Ofurace , Oxadixyl, Oxycarboxin , Penthiopyrad, Tecloftalam, Thifluzamide, Tiadinil, 2-Amino-4-methyl-thiazol-5-carbonsäureanilid, 2-Chlor-N-(1,1,3-trimethyl-indan-4-yl)-nicotinamid, N-(3',4'-Dichlor-5-fluor-biphenyl-2-yl)-3-difluormethyl-1-methyl-1 H-pyrazol-4-carbonsäureamid, 5-Fluor-1,3-dimethyl-1 H-pyrazol-4-carbonsäure [2-(1,3-dimethyl-butyl)-phenyl]-amid, N-(4'-Chlor-3',5-difluor-biphenyl-2-yl)-3-difluormethyl-1-methyl-1 H-pyrazol-4-carbonsäureamid, N-(4'-Chlor-3',5-difluor-biphenyl-2-yl)-3-trifluormethyl-1-methyl-1 H-pyrazol-4-carbonsäureamid, N-(3',4'-Dichlor-5-fluor-biphenyl-2-yl)-3-trifluormethyl-1-methyl-1 H-pyrazol-4-carbonsäureamid, N-(3',5-Difluor-4'-methyl-biphenyl-2-yl)-3-difluormethyl-1-methyl-1 H-pyrazol-4-carbonsäureamid, N-(3',5-Difluor-4'-methyl-biphenyl-2-yl)-3-trifluormethyl-1-methyl-1 H-pyrazol-4-carbonsäureamid, N-(2-Bicyclopropyl-2-yl-phenyl)-3-difluormethyl-1-methyl-1 H-pyrazol-4-carbonsäureamid, N-(cis-2-Bicyclopropyl-2-yl-phenyl)-3-difluormethyl-1-methyl-1 H-pyrazol-4-carbonsäureamid, N-(trans-2-Bicyclopropyl-2-yl-phenyl)-3-difluormethyl-1-methyl-1H-pyrazol-4-carbonsäureamid,
   - Carbonsäuremorpholide: Dimethomorph, Flumorph;
   - Benzoesäureamide: Flumetover, Fluopicolide, Fluopyram, Zoxamide, N-(3-Ethyl-3,5-5trimethyl-cyclohexyl)-3-formylamino-2-hydroxy-benzamid;
   - Sonstige Carbonsäureamide: Carpropamid, Diclocymet, Mandipropamid, Oxytetracyclin, Silthiofam, N-(6-methoxy-pyridin-3-yl)cyclopropancarbonsäureamid;
Azole
   - Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol, 1-(4-Chlor-phenyl)-2-([1,2,4]triazol-1-yl)-cycloheptanol;
   - Imidazole: Cyazofamid, Imazalil, Imazalil-sulfat, Pefurazoat, Prochloraz, Triflumizol;
   - Benzimidazole: Benomyl, Carbendazim , Fuberidazol , Thiabendazol;
   - Sonstige: Ethaboxam, Etridiazol, Hymexazol, 1-(4-Chlor-phenyl)-1-(propin-2-yloxy)-3-(4-(3,4-dimethoxy-phenyl)-isoxazol-5-yl)-propan-2-on;
Stickstoffhaltige Heterocyclylverbindungen
   - Pyridine: Fluazinam, Pyrifenox, 3-[5-(4-Chlor-phenyl)-2,3-dimethyl-isoxazolidin-3-yl]-pyridin, 2,3,5,6-Tetrachlor-4-methansulfonyl-pyridin, 3,4,5-Trichlor-pyridin-2,6-di-carbonitril, N-(1-(5-Brom-3-chlor-pyridin-2-yl)-ethyl)-2,4-dichlor-nicotinamid, N-((5-Brom-3-chlor-pyridin-2-yl)-methyl)-2,4-dichlor-nicotinamid;
   - Pyrimidine: Bupirimate, Cyprodinil, Diflumetorim, Fenarimol, Ferimzone, Mepanipyrim, Nitrapyrin, Nuarimol, Pyrimethanil;
   - Pyrrole: Fludioxonil, Fenpiclonil;
   - Morpholine: Aldimorph, Dodemorph, Dodemorph-Acetat, Fenpropimorph, Tridemorph;
   - Dicarboximide: Fluoroimid, Iprodione, Procymidone, Vinclozolin;
   - sonstige: Acibenzolar-S-methyl, Amisulbrom, Anilazin, Blasticidin-S, Captafol, Captan, Chinomethionat, Dazomet, Debacarb, Diclomezine, Difenzoquat, Difenzoquat-methylsulphat, Famoxadone, Fenamidone, Fenoxanil, Fenpropidin, Folpet, Octhilinone, Oxolinsäure, Piperalin, Probenazole, Proquinazid, Pyroquilon, Quinoxyfen, Triazoxid, Tricyclazole, Triforine, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on;
Carbamate und Dithiocarbamate
   - Thio- und Dithiocarbamate: Ferbam, Mancozeb, Maneb, Metam, Methasulphocarb, Metiram, Propineb, Thiram, Zineb, Ziram;
   - Carbamate: Diethofencarb, Benthiavalicarb, Iprovalicarb, Propamocarb, Propamocarb hydrochlorid, Valiphenal, N-(1-(1-(4-Cyanophenyl)ethansulfonyl)-but-2-yl)carbaminsäure-(4-fluorophenyl)ester;
Sonstige Fungizide
   - Guanidine: Dodine, Dodine freie Base, Guazatine, Guazatine-Acetat, Iminoctadine, Iminoctadine-Triacetat, Iminoctadine-tris(albesilat);
   - Antibiotika: Kasugamycin, Kasugamycin-hydrochlorid-Hydrat, Polyoxine, Streptomycin, Validamycin A;
   - Nitrophenylderivate:
      Binapacryl, Dicloran, Dinobuton, Dinocap, Nitrothal-isopropyl, Tecnazen;
   - Organometallverbindungen: Fentin-Salze wie beispielsweise Fentin-Acetat, Fentin-Chlorid, Fentin-Hydroxid;
   - Schwefelhaltige Heterocyclylverbindungen: Isoprothiolane, Dithianon;
   - Organophosphorverbindungen: Edifenphos, Fosetyl, Fosetyl-aluminium, Iprobenfos, Pyrazophos, Tolclofos-methyl;
   - Organochlorverbindungen: Chlorothalonil, Dichlofluanid, Dichlorophen, Flusulfamide, Hexachlorbenzene, Pencycuron, Pentachlorophenol und dessen Salze, Phthalid, Quintozene, Thiophanate-Methyl, Tolylfluanid, N-(4-Chlor-2-nitro-phenyl)-N-ethyl-4-methyl-benzolsulfonamid;
   - Anorganische Wirkstoffe: Phosphorige Säure und ihre Salze, Schwefel, Bordeaux Brühe, Kupfersalze wie beispielsweise Kupferacetat, Kupferhydroxid, Kupferoxychlorid, basisches Kupfersulfat;
   - Sonstige: Biphenyl, Bronopol, Cyflufenamid, Cymoxanil, Diphenylamin, Metrafenone, Mildiomycin, Oxin-Kupfer, Prohexadione-Calcium, Spiroxamine, Tolylfluanid, N-(Cyclopropylmethoxyimino-(6-difluormethoxy-2,3-difluor-phenyl)-methyl)-2-phenyl acetamid, N'-(4-(4-Chlor-3-trifluormethyl-phenoxy)-2,5-dimethyl-phenyl)-N-ethyl-N-methylformamidin, N'-(4-(4-Fluor-3-trifluormethyl-phenoxy)-2,5-dimethyl-phenyl)-N-ethyl-N-methylformamidin, N'-(2-Methyl-5-trifluormethyl-4-(3-trimethylsilanyl-propoxy)-phenyl)-N-ethyl-N-methylformamidin, N'-(5-Difluormethyl-2-methyl-4-(3-trimethylsilanyl-propoxy)-phenyl)-N-ethyl-N-methylformamidin.

Beispiele für Insektizide sind:
Organo(thio)phosphate:
   Acephat, Azamethiphos, Azinphos-ethyl, Azinphos-methyl, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/ DDVP, Dicrotophos, Dimethoat, Dimethylvinphos, Disulfoton, EPN, Ethion, Ethoprophos, Famphur, Fenamiphos, Fenitrothion, Fenthion, Flupyrazophos, Fosthiazate, Heptenophos, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon, Vamidothion;
Carbamate:
   Aldicarb, Alanycarb, Bendiocarb, Benfuracarb, Butocarboxim, Butoxycarboxim, Carbaryl, Carbofuran, Carbosulfan, Ethiofencarb, Fenobucarb, Formetanat, Furathiocarb, Isoprocarb, Methiocarb, Methomyl, Metolcarb, Oxamyl, Pirimicarb, Propoxur, Thiodicarb, Thiofanox, Trimethacarb, XMC, Xylylcarb, Triazamat;
Pyrethroide:
   Acrinathrin, Allethrin, d-cis-trans Allethrin, d-trans Allethrin, Bifenthrin, Bioallethrin, Bioallethrin S-Cylclopentenyl, Bioresmethrin, Cycloprothrin, Cyfluthrin, beta-, Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin, Deltamethrin, Empenthrin, Esfenvalerate, Etofenprox, Fenpropathrin, Fenvalerate, Flucythrinate, Flumethrin, tau-Fluvalinate, Halfenprox, Imiprothrin, Permethrin, Phenothrin, Prallethrin, Resmethrin, RU 15525, Silafluofen, Tefluthrin, Tetramethrin, Tralomethrin, Transfluthrin, ZXI 8901;
Juvenilhormon-Mimetika:
   Fenoxycarb, Hydroprene, Kinopren, Methopren, Pyriproxyfen;
Nikotinrezeptor-Agonisten/-Antagonisten:
   Acetamiprid, Bensultap, Cartap-Hydrochlorid, Clothianidin, Dinotefuran, Imidacloprid, Thiamethoxam, Nitenpyram, Nikotin, Spinosad (allosterischer Agonist), Thiacloprid, Thiocyclam, Thiosultap-Natrium, und AKD1022;
GABA-Antagonisten:
   Chlordan, Endosulfan, gamma-HCH (Lindan); Acetoprole, Ethiprole, Fipronil, Pyrafluprol, Pyriprol, Vaniliprol, die Phenylpyrazolverbindung der Formel Γ¹ 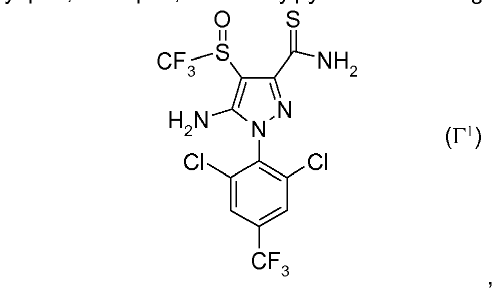
Chloridkanal-Aktivatoren:
   Abamectin, Emamectin-Benzoat, Milbemectin, Lepimectin;
METI I Verbindungen:
   F enazaquin, Fenpyroximate, Pyrimidifen, Pyridaben, Tebufenpyrad, Tolfenpyrad, Flufenerim, Rotenon;
METI II und III Verbindungen:
   Acequinocyl, Fluacrypyrim, Hydramethylnon;
Entkoppler der oxidativen Phosphorylierung:
   Chlorfenapyr, DNOC;
Inhibitoren der oxidativen Phosphorylierung:
   Azocyclotin, Cyhexatin, Diafenthiuron, Fenbutatin-Oxid, Propargit, Tetradifon;
Moulting disruptors:
   Cyromazin, Chromafenozid, Halofenozid, Methoxyfenozid, Tebufenozid;
Synergisten:
   Piperonylbutoxid, Tribufos;
Natriumkanalblocker:
   Indoxacarb, Metaflumizon;
Räuchermittel:
   Methylbromid, Chloropicrinsulfurylfluorid;
Selektive Ernährungsblocker:
   Cryolite, Pymetrozin, Flonicamid;
Milbenwachstumsinhibitoren:
   Clofentezin, Hexythiazox, Etoxazol;
Chitinsyntheseinhibitoren:
   Buprofezin, Bistrifluron, Chlorfluazuron, Diflubenzuron, Flucycloxuron, Flufenoxuron, Hexaflumuron, Lufenuron, Novaluron, Noviflumuron, Teflubenzuron, Triflumuron;
Lipidbiosyntheseinhibitoren:
   Spirodiclofen, Spiromesifen, Spirotetramat;
Octapaminerge Agonisten:
   Amitraz;
RyanodinrezeptorModulatoren:
   Flubendiamide;
Diverse:
   Aluminiumphosphid, Amidoflumet, Benclothiaz, Benzoximate, Bifenazate, Borax, Bromopropylat, Cyanid, Cyenopyrafen, Cyflumetofen, Chinomethionat, Dicofol, Fluoroacetat, Phosphin, Pyridalyl, Pyrifluquinazon, Schwefel, Brechweinstein; N-R'-2,2-Dihalo-1-R"cyclo-propancarboxamid-2-(2,6-dichlor-α,α,α-tri-fluor-p-tolyl)hydrazon oder N-R'-2,2-Di(R"')propionamid-2-(2,6-dichlor-α,α,α-trifluor-p-tolyl)-hydrazon, worin R' für Methyl oder Ethyl steht, Halo für Chlor oder Brom steht, R" für Wasserstoff oder Methyl steht und R'" für Methyl oder Ethyl steht;
Anthranilamide:
   Chloranthraniliprol, die Verbindung der Formel Γ² 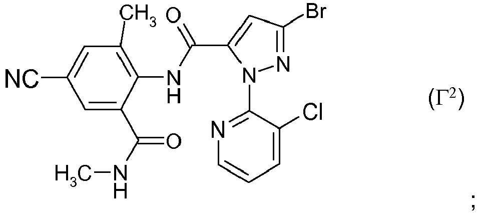
Malononitrile:
   CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, CF₃CF₂CH₂C(CN)₂CH₂(CF₂)₃CF₂H, 2-(2,2,3,3,4,4,5,5-Octafluorpentyl)-2-(3,3,4,4,4-pentafluorbutyl)-malonodinitril, und CF₂HCF₂CF₂CF₂CH₂C(CN)₂CH₂CH₂CF₂CF₃;
Mikrobielle Disruptoren:
   Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis;
Alkinylether der Formel Γ⁴ and Γ⁵: 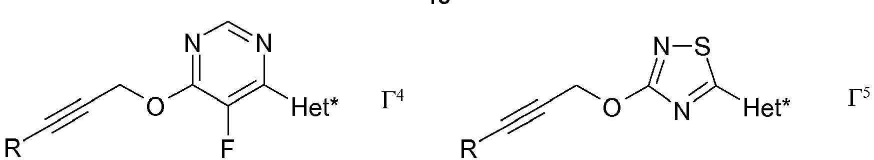 worin R für Methyl oder Ethyl steht und Het* für 3,3-Dimethylpyrrolidin-1-yl, 3-Methylpiperidin-1-yl, 3,5-Dimethylpiperidin-1-yl, 3-Trifluormethylpiperidin-1-yl, Hexahydroazepin-1-yl, 2,6-Dimethylhexahydroazepin-1-yl oder 2,6-Dimethylmorpholin-4-yl steht. Diese Verbindungen sind beispielsweise in JP 2006131529 beschrieben.

### Beispiele für Herbizide sind:

Amid-Herbizide:
   Allidochlor, Amicarbazon, Beflubutamid, Benzadox, Benzipram, Bromobutid, Cafenstrol, Cdea, Cyprazol, Dimethenamid, Dimethenamid-p, Diphenamid, Epronaz, Etnipromid, Fentrazamid, Flucarbazon, Flupoxam, Fomesafen, Halosafen, Isocarbamid, Isoxaben, Napropamid, Naptalam, Pethoxamid, Propyzamid, Quinonamid, Saflufenacil, Tebutam;
Anilid-Herbizide:
   Chloranocryl, Cisanilide, Clomeprop, Cypromid, Diflufenican, Etobenzanid, Fenasulam, Flufenacet, Flufenican, Ipfencarbazone, Mefenacet, Mefluidide, Metamifop, Monalid, Naproanilid, Pentanochlor, Picolinafen, Propanil, Sulfentrazon;
Arylalanin-Herbizide:
   Benzoylprop, Flamprop, Flamprop-m;
Chloroacetanilid-Herbizide:
   Acetochlor, Alachlor, Butachlor, Butenachlor, Delachlor, Diethatyl, Dimethachlor, Metazachlor, Metolachlor, S-Metolachlor, Pretilachlor, Propachlor, Propisochlor, Prynachlor, Terbuchlor, Thenylchlor, Xylachlor;
Sulfonanilid-Herbizide:
   Benzofluor, Cloransulam, Diclosulam, Florasulam, Flumetsulam, Metosulam, Perfluidone, Pyrimisulfan, Profluazol;
Sulfonamid-Herbizide:
   Asulam, Carbasulam, Fenasulam, Oryzalin, Penoxsulam, Pyroxsulam ;
Thioamid-Herbizide:
   Bencarbazone, Chlorthiamid ;
Antibiotika-Herbizide:
   Bilanafos;
Aromatische Säure-Herbizide:
Benzoesäure-Herbizide:
   Chloramben, Dicamba, 2,3,6-tba, Tricamba;
Pyrimidinyloxybenzesäure-Herbizide:
   Bispyribac, Pyriminobac;
Pyrimidinylthiobenzoesäure-Herbizide:
   Pyrithiobac;
Phthalsäure-Herbizide:
   Chlorthal;
Picolinsäure-Herbizide:
   Aminopyralid, Clopyralid, Picloram;
Chinolincarbonsäure-Herbizide:
   Quinclorac, Quinmerac;
Arsen-haltige Herbizide:
   Cacodylsäure, Cma, Dsma, Hexaflurat, Maa, Mama, Msma, Kaliumarsenit, Natriumarsenit;
Benzoylcyclohexanedion-Herbizide:
   Mesotrion, Sulcotrion, Tefuryltrion, Tembotrion;
Benzofuranylalkylsulfonat-Herbizide:
   Benfuresat, Ethofumesat;
Benzothiazole-Herbizide:
   Benazolin, Benzthiazuron, Fenthiaprop, Mefenacet, Methabenzthiazuron;
Carbamat-Herbizide:
   Asulam, Carboxazol, Chlorprocarb, Dichlormat, Fenasulam, Karbutilat, Terbucarb;
Carbanilat-Herbizide:
   Barban, Bcpc, Carbasulam, Carbetamid, Cepc, Chlorbufam, Chlorpropham, Cppc, Desmedipham, Phenisopham, Phenmedipham, Phenmedipham-ethyl, Propham, Swep;
Cyclohexenoxim-Herbizide:
   Alloxydim, Butroxydim, Clethodim, Cloproxydim, Cycloxydim, Profoxydim, Sethoxydim, Tepraloxydim, Tralkoxydim;
Cyclopropylisoxazol-Herbizide:
   Isoxachlortol, Isoxaflutol;
Dicarboximid-Herbizide:
   Cinidon-ethyl, Flumezin, Flumiclorac, Flumioxazin, Flumipropyn;
Dinitroanilin-Herbizide:
   Benfluralin, Butralin, Dinitramine, Ethalfluralin, Fluchloralin, Isopropalin, Methalpropalin, Nitralin, Oryzalin, Pendimethalin, Prodiamine, Profluralin, Trifluralin;
Dinitrophenol-Herbizide:
   Dinofenat, Dinoprop, Dinosam, Dinoseb, Dinoterb, Dnoc, Etinofen, Medinoterb;
Diphenylether-Herbizide:
   Ethoxyfen;
Nitrophenylether-Herbizide:
   Acifluorfen, Aclonifen, Bifenox, Chlomethoxyfen, Chlornitrofen, Etnipromid, Fluorodifen, Fluoroglycofen, Fluoronitrofen, Fomesafen, Furyloxyfen, Halosafen, Lactofen, Nitrofen, Nitrofluorfen, Oxyfluorfen;
Dithiocarbamat-Herbizide:
   Dazomet, Metam;
Halogenierte aliphatische Herbizide:
   Alorac, Chloropon, Dalapon, Flupropanate, Hexachloroacetone, lodomethane, Methylbromide, Monochloroaceticacid, Sma, Tca;
Imidazolinon-Herbizide:
   Imazamethabenz, Imazamox, Imazapic, Imazapyr, Imazaquin, Imazethapyr;
Anorganische Herbizide:
   Ammoniumsulfamat, Borax, Calciumchlorat, Kupfersulfat, Eisensulfat, Kaliumazid, Kaliumcyanat, Natriumazid, Natriumchlorat, Schwefelsäure;
Nitril-Herbizide:
   Bromobonil, Bromoxynil, Chloroxynil, Dichlobenil, lodobonil, loxynil, Pyraclonil;
Organophosphor-Herbizide:
   Amiprofos-methyl, Anilofos, Bensulide, Bilanafos, Butamifos, 2,4-dep, Dmpa, Ebep, Fosamine, Glufosinate, Glufosinat-p, Glyphosat, Piperophos;
Oxadiazolon-Herbizide:
   Dimefuron, Methazole, Oxadiargyl, Oxadiazon;
Oxazol-Herbizide:
   Carboxazol, Isouron, Isoxaben, Isoxachlortol, Isoxaflutol, Monisouron, Pyroxasulfon, Topramezon;
Phenoxy-Herbizide:
   Bromofenoxim, Clomeprop, 2,4-deb, 2,4-dep, Difenopenten, Disul, Erbon, Etnipromid, Fenteracol, Trifopsim;
Phenoxyessigsäure-Herbizide:
   4-CPA, 2,4-D, 3,4-Da, MCPA, MCPA-thioethyl, 2,4,5-T;
Phenoxybuttersäure-Herbizide:
   4-Cpb, 2,4-DB, 3,4-DB, MCPB, 2,4,5-Tb ;
Phenoxypropionsäure-Herbizide:
   Cloprop, 4-cpp, Dichlorprop, Dichlorprop-p, 3,4-dp, Fenoprop, Mecoprop, Mecoprop-p,
Aryloxyphenoxypropionic-Herbizide: Chlorazifop, Clodinafop, Clofop, Cyhalofop, Diclofop, Fenoxaprop, Fenoxaprop-p, Fenthiaprop, Fluazifop, Fluazifop-p, Haloxyfop,
   Haloxyfop-p, Isoxapyrifop, Metamifop, Propaquizafop, Quizalofop, Quizalofop-p, Trifop;
Phenylendiamin-Herbizide:
   Dinitramin, Prodiamin;
Pyrazol-Herbizide:
   Azimsulfuron, Difenzoquat, Halosulfuron, Metazachlor, Pyrazosulfuron, Pyroxasulfone;
Benzoylpyrazol-Herbizide:
   Benzofenap, Pyrasulfotole, Pyrazolynate, Pyrazoxyfen, Topramezone;
Phenylpyrazol-Herbizide:
   Fluazolat, Nipyraclofen, Pyraflufen;
Pyridazin-Herbizide:
   Credazin, Pyridafol, Pyridat;
Pyridazinon-Herbizide:
   Brompyrazon, Chloridazon, Dimidazon, Flufenpyr, Metflurazon, Norflurazon, Oxapyrazon, Pydanon;
Pyridin-Herbizide:
   Aminopyralid, Cliodinat, Clopyralid, Diflufenican, Dithiopyr, Flufenican, Fluroxypyr, Haloxydin, Picloram, Picolinafen, Pyriclor, Pyroxsulam, Thiazopyr, Triclopyr;
Pyrimidindiamin-Herbizide:
   Iprymidam, Tioclorim;
Quartäre Ammonium-Herbizide:
   Cyperquat, Diethamquat, Difenzoquat, Diquat, Morfamquat, Paraquat;
Thiocarbamat-Herbizide:
   Butylat, Cycloat, Di-allat, Eptc, Esprocarb, Ethiolat, Isopolinat, Methiobencarb, Molinat, Orbencarb, Pebulat, Prosulfocarb, Pyributicarb, Sulfallat, Thiobencarb, Tiocarbazil, Tri-allat, Vernolat;
Thiocarbonat-Herbizide:
   Dimexano, Exd, Proxan;
Thioharnstoff-Herbizide:
   Methiuron;
Triazin-Herbizide:
   Dipropetryn, Indaziflam, Triaziflam, Trihydroxytriazin;
Chlorotriazin-Herbizide:
   Atrazin, Chlorazin, Cyanazin, Cyprazin, Eglinazin, Ipazin, Mesoprazin, Procyazin, Proglinazine, Propazin, Sebuthylazin, Simazin, Terbuthylazin, Trietazin;
Methoxytriazin-Herbizide:
   Atraton, Methometon, Prometon, Secbumeton, Simeton, Terbumeton;
Methylthiotriazin-Herbizide:
   Ametryn, Aziprotryne, Cyanatryn, Desmetryn, Dimethametryn, Methoprotryn, Prometryn, Simetryn, Terbutryn;
Triazinon-Herbizide:
   Ametridion, Amibuzin, Hexazinon, Isomethiozin, Metamitron, Metribuzin;
Triazol-Herbizide:
   Amitrol, Cafenstrol, Epronaz, Flupoxam;
Triazolon-Herbizide:
   Amicarbazon, Bencarbazon, Carfentrazon, Flucarbazon, Ipfencarbazon, Propoxycarbazon, Sulfentrazon, Thiencarbazon;
Triazolopyrimidin-Herbizide:
   Cloransulam, Diclosulam, Florasulam, Flumetsulam, Metosulam, Penoxsulam, Pyroxsulam;
Uracil-Herbizide:
   Benzfendizon, Bromacil, Butafenacil, Flupropacil, Isocil, Lenacil, Saflufenacil, Terbacil;
Harnstoff-Herbizide:
   Benzthiazuron, Cumyluron, Cycluron, Dichloralurea, Diflufenzopyr, Isonoruron, Isouron, Methabenzthiazuron, Monisouron, Noruron;
Phenylharnstoff-Herbizide:
   Anisuron, Buturon, Chlorbromuron, Chloreturon, Chlorotoluron, Chloroxuron, Daimuron, Difenoxuron, Dimefuron, Diuron, Fenuron, Fluometuron, Fluothiuron, Isoproturon, Linuron, Methiuron, Methyldymron, Metobenzuron, Metobromuron, Metoxuron, Monolinuron, Monuron, Neburon, Parafluron, Phenobenzuron, Siduron, Tetrafluron, Thidiazuron ;
Sulfonylharnstoff-Herbizide:
   Pyrimidinylsulfonylharnstoff-Herbizide: Amidosulfuron, Azimsulfuron, Bensulfuron, Chlorimuron, Cyclosulfamuron, Ethoxysulfuron, Flazasulfuron, Flucetosulfuron, Flupyrsulfuron, Foramsulfuron, Halosulfuron, Imazosulfuron, Mesosulfuron, Nicosulfuron, Orthosulfamuron, Oxasulfuron, Primisulfuron, Propyrisulfuron, Pyrazosulfuron, Rimsulfuron, Sulfometuron, Sulfosulfuron, Trifloxysulfuron, Triazinylsulfonylharnstoff-Herbizide: Chlorsulfuron, Cinosulfuron, Ethametsulfuron, lodosulfuron, Metsulfuron, Prosulfuron, Thifensulfuron, Triasulfuron, Tribenuron, Triflusulfuron, Tritosulfuron;
Thiadiazolylharnstoff-Herbizide:
   Buthiuron, Ethidimuron, Tebuthiuron, Thiazafluron, Thidiazuron;
Nicht klassifizierte Herbizide:
   Acrolein, Allylalkohol, Aminocyclopyrachlor, Azafenidin, Bentazon, Benzobicyclon, Buthidazol, Calciumcyanamid, Cambendichlor, Chlorfenac, Chlorfenprop, Chlorflurazol, Chlorflurenol, Cinmethylin, Clomazon, Cpmf, Cresol, Cyanamid, ortho-Dichlorobenzol, Dimepiperat, Endothal, Fluoromidin, Fluridon, Flurochloridon, Flurtamon, Fluthiacet, Indanofan, Methylisothiocyanat, Och, Oxaziclomefon, Pentachlorophenol, Pentoxazon, Phenylquecksilberacetat, Pinoxaden, Prosulfalin, Pyribenzoxim, Pyriftalid, Quinoclamin, Rhodethanil, Sulglycapin, Thidiazimin, Tridiphan, Trimeturon, Tripropindan, Tritac.

Vorzugsweise sind die Pflanzenschutzmittel unter solchen ausgewählt, die in Wasser nicht oder schwer löslich sind. "In Wasser schwer löslich" bedeutet dabei, dass höchstens 5 g, vorzugsweise höchstens 2 g und insbesondere höchstens 1 g des Stoffes in 1 I Wasser unter Normalbedingungen (T = 25 °C +/- 20 %, p = 101325 Pascal +/- 20 %) löslich sind.

Adjuvantien sind im Pflanzenschutz Hilfsstoffe, welche die Aktivität eines Wirkstoffs (hier: Pflanzenschutzmittel) und/oder seine Selektivität in Bezug auf die erwünschte Wirkung (z.B. fungizide, insektizide, herbizide, bakterizide, nematizide, wachstumsregulatorische Wirkung) erhöhen, die jedoch für sich genommen keine oder nur eine sehr geringe Wirkung bezüglich der Pflanzenschutzwirkung aufweisen. Die Wirkung von Adjuvantien beruht vielfach auf ihrer Grenzflächenaktivität, die den Kontakt der Applikationsform des Wirkstoffs, in der Regel eine wässrige wirkstoffhaltige Spritzbrühe, mit der Pflanzenoberfläche verbessert sowie durch Verringerung der Oberflächenspannung das Eindringen der Applikationsform und damit des Wirkstoffs in das Erdreich verbessert. Ob eine bestimmte oberflächenaktive Substanz als Adjuvans wirkt, d. h. durch sie eine Wirkungs- oder Selektivitätssteigerung erreicht wird, hängt häufig auch von der Art des Wirkstoffs ab.

Da in der erfindungsgemäßen Gelformulierung elektrolytempfindliche Verdicker eingesetzt werden, ist es bevorzugt, als Adjuvantien nichtionische Verbindungen einzusetzen.

Bevorzugt ist das wenigstens eine Adjuvans daher ausgewählt unter Polyetherverbindungen, die von Alkylenoxiden (z.B. Ethylenoxid, Propylenoxid, Butylenoxid) abgeleitete Wiederholungseinheiten aufweisen, Alkylpolyglykosiden, alkoxylierten Fettsäureestern von Polyhydroxylverbindungen und Gemischen der vorgenannten Produkte.

Geeignete Polyetherverbindungen weisen typischerweise wenigstens eine, z. B. 1, 2, 3 oder 4 Polyethergruppen auf, welche neben den von Ethylenoxid abgeleitete Wiederholungseinheiten gegebenenfalls weitere, in der Regel von C₃-C₈-Alkylenoxiden und/oder Styroloxid abgeleitete Wiederholungseinheit aufweisen. Die Polyethergruppen werden im Folgenden auch als Makrogolteil bezeichnet. In den Polyetherverbindungen sind die Polyethergruppen in der Regel kovalent an einen organischen Rest (Basisteil) gebunden oder über ein Ethersauerstoffatom zu einem Makromolekül verknüpft. Bei dem Basisteil handelt es sich typischerweise um einen organischen Rest mit in der Regel 4 bis 40, häufig 6 bis 30 und insbesondere 10 bis 22 Kohlenstoffatomen, wobei das Basisteil gegebenenfalls noch ein oder mehrere funktionelle Gruppen, z. B. 1 oder 2 Carbonyloxygruppen (C(=O)-O-Gruppen) und/oder 1, 2, 3 oder 4 OH-Gruppen und/oder 1, 2, 3, 4, 5 oder 6 Stickstoffatome aufweisen kann. Beispiele für als Basisteil geeignete Reste sind C₈-C₃₀-Alkyl, C₈-C₃₀-Alkenyl,C₄-C₃₀-Alkandiyl, C₈-C₃₀-Alkantriyl, C₅-C₁₀-Cycloalkyl, C₅-C₁₀-Cycloalkandiyl, α,α'-[Bisphenyl-C₁-C₄-alkan]diyl, α,α'-[Biscyclohexyl-C₁-C₄-alkan]diyl, Mono- und Di-C₄-C₂₀-Alkylphenyl, insbesondere Butylphenyl, 4-tert-Butylphenyl, Hexylphenyl, Octylphenyl, Nonylphenyl, Dodecylphenyl, Tridecylphenyl, C₈-C₂₀-Alkylcarbonyl, Benzoyl, C₁-C₂₀-Alkylbenzoyl, Naphthyl, das gegebenenfalls 1, 2 oder 3 C₁-C₁₀-Alkylgruppen aufweisen kann, Mono-, Di- und Tristyrylphenyl, weiterhin von Sorbitanestern, von Alkylpolyglykosiden, von Mono- oder Diglyceriden sowie von (Oligo)alkyleniminen abgeleitete Reste.

Unter Alkyl(poly)glykosiden bzw. Alkylpolyglucosiden versteht man Verbindungen, die einen oder mehrere, insbesondere einen Alkylrest, insbesondere einen C₆-C₂₂-Alkylrest aufweisen, der über ein Sauerstoffatom an einen Mono- oder Oligosaccharid-Rest, z. B. an einen Mono-, Di oder Trisaccharid-Rest gebundenen ist. Die Saccharid-Einheiten sind dabei typischerweise von Glucose abgeleitet. Bevorzugte Alkyl(poly)glykoside sind solche, die im Mittel 1 bis 2 Glucoseeinheiten aufweisen. In der Regel handelt es sich hierbei um Gemische. In Polyetherverbindungen, welche einen von Alkyl(poly)-glykosiden abgeleiteten Basisteil aufweisen, ersetzt der wenigstens eine Makrogolteil wenigstens eine der nicht veresterten Hydroxylgruppen des Mono- bzw. Oligosaccharid-Rests.

Bei den ethoxylierten Fettsäureestern von Polyhydroxylverbindungen handelt es sich in der Regel um Ethoxylate von Mono-, Di- oder Triestern von Fettsäuren mit aliphatischen oder cycloaliphatischen Polyhydroxylverbindungen, die in der Regel 3, 4, 5 oder 6 Hydroxylgruppen und 3, 4, 5 oder 6 C-Atome aufweisen, wobei die nichtethoxylierten Ester der Fettsäuren mit Polyhydroxylverbindungen in der Regel noch wenigstens eine, vorzugsweise 2, 3 oder 4 freie Hydroxylgruppen aufweisen. Die Fettsäurebestandteile in diesen Substanzen sind üblicherweise von gesättigten, einfach oder mehrfach ungesättigten Fettsäuren abgeleitet, wobei die Fettsäuren in der Regel 6 bis 22 und insbesondere 8 bis 18 C-Atomen aufweisen. Beispiele für geeignete Fettsäurebestandteile in diesen Substanzen sind von gesättigten Fettsäuren, wie Laurinsäure, Myristinsäure, Palmitinsäure, Margarinsäure, Stearinsäure, Arachinsäure, Behensäure, Lignocerinsäure und Cerotinsäure, von ungesättigten Fettsäuren, wie Undecylensäure, Palmitoleinsäure, Ölsäure, Elaidinsäure, Vaccensäure, Icosensäure, Cetoleinsäure, Erucasäure und Nervonsäure, abgeleitete Reste, sowie von mehrfach ungesättigten Fettsäuren, wie Linolsäure, α-Linolensäure, γ-Linolensäure, Arachidonsäure, Timnodonsäure, Clupanodonsäure und Cervonsäure, abgeleitet. Die Fettsäurebestandteile können sich auch von Gemischen der vorgenannten Fettsäuren ableiten.

Bevorzugte Polyetherverbindungen sind ausgewählt unter Polyethoxylaten und Poly(ethoxylat-co-propoxylat)en von C₈-C₂₂-Alkanolen, Polyethoxylaten und Poly(ethoxylat-co-propoxylat)en von Fettsäuren, Polyethoxylaten und Poly(ethoxylat-co-propoxylat)en von Fettaminen, Polyethoxylaten und Poly(ethoxylat-co-propoxylat)en von Mono- und Diglyceriden aliphatischer C₈-C₂₂-Monocarbonsäuren, Polyethoxylaten und Poly(ethoxylat-co-propoxylat)en von Sorbitanestern aliphatischer C₈-C₂₂-Monocarbonsäuren, Polyethoxylaten und Poly(ethoxylat-co-propoxylat)en von Alkylphenolen, Polyethoxylaten und Poly(ethoxylat-co-propoxylat)en von Di- und Tristyrylphenolen, Polyethoxylaten und Poly(ethoxylat-co-propoxylat)en von Alkylpolyglykosiden und Gemischen davon.

Das Molekulargewicht der Polyetherverbindungen kann über weite Bereich variieren und liegt typischerweise im Bereich von 200 bis 10000 Dalton und insbesondere im Bereich von 300 bis 5000 Dalton (jeweils zahlenmittleres Molekulargewicht Mₙ), soweit nichts anderes angegeben ist. Vorzugsweise liegt der Quotient aus massen- und zahlenmittlerem Molekulargewicht M_{w}/Mₙ im Bereich von 0,9 und 1,6, bevorzugt im Bereich von 1,0 und 1,4 und besonders bevorzugt im Bereich von 1,1 und 1,3.

Bevorzugte ethoxylierte Fettsäureester von Polyhydroxylverbindungen sind ethoxylierte Monofettsäureester des Glycerins sowie ethoxylierte Mono- und Difettsäureester des Sorbitans bzw. des Sorbitananhydrids, wobei die Fettsäurereste in diesen Verbindungen vorzugsweise 8 bis 20 und insbesondere 10 bis 18 C-Atome aufweisen. Die Fettsäurereste können gesättigt sowie ein oder mehrfach ungesättigt sein und sind typischerweise von den vorgenannten Fettsäuren und deren Gemischen abgeleitet, insbesondere von Laurinsäure, Myristinsäure, Palmitinsäure, Margarinsäure, Stearinsäure, Palmitoleinsäure, Ölsäure, Linolsäure und deren Gemischen.

Der Ethoxylierungsgrad, d. h. die durchschnittliche Anzahl an von Ethylenoxid abgeleiteten Wiederholungseinheiten beträgt typischerweise 5 bis 50 und insbesondere 10 bis 40.

Die oben genannten Adjuvantien werden teilweise in Kombination mit weiteren Hilfsmitteln verwendet, die ihre Wirkungsweise verbessern bzw. ihr Wirkungsspektrum verbreitern. Übliche ergänzende Hilfsstoffe sind beispielsweise organische Lösungsmittel, welche die Spreitung auf der Pflanzenoberfläche weiter verbessern. Geeignete Lösungsmittel sind beispielsweise aliphatische und insbesondere aromatische Lösungsmittel, wie Toluol, die Xylole und die Solvesso- und Naphtha-Produkte.

In der Regel sind Pflanzenschutzmittel und Adjuvantien nicht generell unverträglich, sondern meist nur dann, wenn das Adjuvans in einer relativ großen Menge eingesetzt wird. Überschreitet nämlich seine Konzentration in einer wässrigen dispersen Phase einen Grenzwert, so kann das Adjuvans ein Lösungsmittel für das in Wasser schwer oder nicht lösliche Pflanzenschutzmittel darstellen. Gleichzeitig ist aber seine Konzentration dennoch so gering, dass das Pflanzenschutzmittel im Adjuvans in gesättigter oder übersättigter Form vorliegt. Durch Ostwald-Reifung kommt es dann zu einem Größenwachstum der größeren auf Kosten der kleineren Kristalle in der Formulierung. Wenn dieser Prozess weit genug in der Formulierung voranschreitet, kann dies zu Stabilitäts- und Applikationsproblemen mit den Pflanzenschutzmittelprodukten führen. Ab welcher Konzentration des Adjuvans es zur Ostwaldreifung des Pflanzenschutzmittels in inakzeptablem Ausmaß kommt, hängt vom einzelnen Pflanzenschutzmittel, seiner eigenen Konzentration, vom verwendeten Adjuvans und von der Art und Konzentration anderer Komponenten, wie Dispergiermittel und andere Hilfsmittel, ab. Dem Formulierungsfachmann sind jedoch Art und Konzentration einzelner Adjuvantien, die bei der gemeinsamen Formulierung mit bestimmten Pflanzenschutzmitteln in wässriger Phase zu Präzipitatbildung führen, häufig bekannt oder ergeben sich bei Formulierungsversuchen.

Zur Veranschaulichung seien spezielle Beispiele für unverträgliche Stoffe A und B genannt:

| Stoff A | Stoff B |
|---|---|
| Dithianon | Pyrimethanil |
| Epoxiconazol/Dimoxystrobin | C₁₆/C₁₈-Alkohol alkoxyliert mit 2-10 Mol Ethylenoxid und 5-10 Mol Propylenoxid |
| Terbuthylazin | Dimethenamid |

Das wenigstens eine Pflanzenschutzmittel ist in der gelförmigen Phase, in welcher es enthalten ist, in einer Gesamtmenge von vorzugsweise 2 bis 60 Gew.-%, besonders bevorzugt von 5 bis 50 Gew.-% und insbesondere von 10 bis 40 Gew.-%, bezogen auf das Gesamtgewicht der Phase, enthalten.

Das wenigstens eine Adjuvans ist in der gelförmigen Phase, in welcher es enthalten ist, in einer Gesamtmenge von vorzugsweise 2 bis 50 Gew.-%, besonders bevorzugt von 5 bis 40 Gew.-% und insbesondere von 10 bis 30 Gew.-%, bezogen auf das Gesamtgewicht der Phase, enthalten. Durch die Einbettung in ein Gel kann das Adjuvans in deutlich größeren Mengen in der erfindungsgemäßen Gelformulierung enthalten sein als dies in üblichen Flüssigformulierungen möglich ist.

Da die erfindungsgemäße Gelformulierung wasserbasiert ist, ist der wenigstens eine elektrolytempfindlichen Verdicker bevorzugt unter solchen ausgewählt, die für die Verdickung wässriger Systeme geeignet sind.

Grundsätzlich sind solche Verdicker elektrolytempfindlich, die ionisch dissoziierbare Gruppen enthalten, d.h. die Polyelektrolyte darstellen. Polyelektrolyte werden je nach Art der ionisch dissoziierbaren Gruppen in Polysäuren und Polybasen unterteilt. Beispiele für charakteristische Grundeinheiten von Polysäuren sind Polyphosphorsäure (-O-P(O)(OH)-), Vinylschwefelsäure-Einheiten (-CH₂-CH(OSO₃H)-), Vinylsulfonsäure-Einheiten (-CH₂-CH(SO₃H)-), Vinylphosphonsäureeinheiten (-CH₂-CH(PO(OH)₂)-) und Acrylsäure-bzw. Methacrylsäure-Einheiten (-CH₂-CH(COOH)- bzw. -CH₂-C(CH₃)(COOH)-). Polybasen enthalten meist Imin-Einheiten (-NH-), Amin-Einheiten (z.B. Vinylamin-Einheiten, wie -CH₂-CH(NH₂)-) oder stickstoffhaltige heterocyclische Einheiten, wie Vinylpyridin-Einheiten. Aus Polysäuren entstehen bei der Dissoziation durch Protonenabspaltung Polyanionen, während Polybasen durch Aufnahme von Protonen zu Polykationen reagieren können. Polyelektrolyte, die sowohl kationische als auch anionische Gruppen enthalten, werden als Polyampholyte bezeichnet.

Bevorzugt ist der elektrolytempfindliche Verdicker weder ein natürlicher Verdicker (hierunter fallen Produkte wie Agar-Agar, Carrageen, Tragant, Gummi arabicum, Alginate, Pektinate, Polyosen, Guarmehl, Johannisbrotbaumkernmehl, Stärke, Dextrine, Gelatine Casein) noch ein abgewandelter Naturstoff (hierunter fallen Celluloseether, wie Carboxymethylcellulose, des Weiteren Hydroxyethyl- und propylcellulose und dergleichen). Bevorzugt handelt es sich bei dem elektrolytempfindlichen Verdicker um einen vollsynthetischen organischen Verdicker.

Vorzugsweise ist der vollsynthetische organische Verdicker dabei ausgewählt unter Polyacrylsäuren und/oder Polyacrylaten mit einem zahlenmittleren Molekulargewicht von 1·10³ bis 1·10⁹, Homo- oder Copolymeren von Acrylamid und/oder Methacrylamid mit einem zahlenmittleren Molekulargewicht von 1·10³ bis 1·10⁹ und Ethylen/Maleinsäureanhydrid-Copolymeren mit einem zahlenmittleren Molekulargewicht von 1·10³ bis 1·10⁹; besonders bevorzugt unter Homo- oder Copolymeren von Acrylamid und/oder Methacrylamid mit einem zahlenmittleren Molekulargewicht von 1·10³ bis 1·10⁹ und stärker bevorzugt unter Copolymeren von Acrylamid und/oder Methacrylamid mit einem zahlenmittleren Molekulargewicht von 1·10³ bis 1·10⁹.

Stärker bevorzugt ist der wenigstens eine elektrolytempfindliche Verdicker ausgewählt unter Polymeren erhältlich durch radikalische Copolymerisation von
A) Acryloyldimethyltaurinsäure (2-Acrylamido-2-methyl-1-propansulfonsäure; Acrylamidopropylmethylensulfonsäure; AMPS®) und/oder Salzen davon;
B) einem oder mehreren Makromonomeren, enthaltend
   a) eine zur Polymerisation befähigte Endgruppe, die im Reaktionsmedium zumindest teilweise löslich ist,
   b) einen hydrophoben Teil, der Wasserstoff oder einen gesättigten oder ungesättigten, linearen oder verzweigten, aliphatischen, cycloaliphatischen oder aromatischen C₁-C₁₀₀-Kohlenwasserstoffrest darstellt, und
   c) gegebenenfalls einen hydrophilen Teil, der auf Polyalkylenoxiden basiert; und
C) optional einem oder mehreren weiteren mindestens einfach oder mehrfach olefinisch ungesättigten Sauerstoff-, Stickstoff-, Schwefel-, Phosphor-, Chlor- und/oder Fluor-haltigen Comonomeren.

Solche Copolymere sind grundsätzlich bekannt und beispielsweise in der DE-A-10163888 beschrieben, worauf hiermit in vollem Umfang Bezug genommen wird.

Bevorzugt enthalten die Makromonomeren B) einen hydrophilen Teil, der auf Polyalkoxiden, bevorzugt Polyethylenoxiden und/oder Poylypropylenoxiden, basiert.

Als Salze der Acrylamidopropylmethylensulfonsäure (AMPS) eignen sich bevorzugt die Lithium-, Natrium-, Kalium-, Magnesium-, Calcium-, Ammonium-, Monoalkylammonium-, Dialkylammonium-, Trialkylammonium- oder Tetraalkylammonium-Salze, wobei die Alkylsubstituenten der Ammoniumionen unabhängig voneinander (C₁-C₂₂)-Alkylreste darstellen, die mit 0 bis 3 Hydroxyalkylgruppen besetzt sein können, deren Alkylkettenlänge in einem Bereich von C₂ bis C₁₀ variieren kann. Ebenfalls geeignet sind ein- bis dreifach ethoxylierte Ammoniumverbindungen mit unterschiedlichem Ethoxylierungsgrad. Als Salze besonders bevorzugt sind die Natrium- und AmmoniumSalze.

Der Neutralisationsgrad der Acrylamidopropylmethylensulfonsäure (AMPS) beträgt bevorzugt 70 bis 100 Mol%.

Bevorzugt handelt es sich beim Comonomeren A) um die Natrium- und/oder Ammoniumsalze der Acrylamidopropylmethylensulfonsäure (AMPS).

Bevorzugte Makromonomere B) sind weiter unten unter (f) beschrieben.

In einer bevorzugten Ausführungsform enthalten die Polymere noch weitere olefinisch ungesättigte Sauerstoff-, Stickstoff-, Schwefel-, Phosphor-, Chlor- und/oder Fluorhaltige Comonomere C).

Bevorzugt als Comonomere C) sind olefinisch ungesättigte Säuren oder deren Salze, bevorzugt mit ein ein- und zweiwertigen Gegenionen, besonders bevorzugt Styrolsulfonsäure, Vinylsulfonsäure, Vinylphosphonsäure, Allylsulfonsäure, Methallylsulfonsäure, Acrylsäure, Methacrylsäure und/oder Maleinsäure bzw. Maleinsäureanhydrid, Fumarsäure, Crotonsäure, Itaconsäure oder Seneciosäure bzw. deren Salze. Bevorzugte Gegenionen sind Li⁺, Na⁺, K⁺, Mg²⁺, Ca²⁺, Al³⁺, NH₄⁺, Monoalkylammonium-, Dialkylammonium-, Trialkylammonium- und Tetraalkylammonium-Ionen, worin die Substituenten der Amine unabhängig voneinander C₁-C₂₂-Alkylreste darstellen, die mit 0 bis 3 Hydroxyalkylgruppen besetzt sein können, deren Alkylkettenlänge im Bereich C₂ bis C₁₀ variieren kann. Zusätzlich können auch ein- bis dreifach ethoxylierte Ammoniumverbindungen mit unterschiedlichem Ethoxylierungsgrad, sowie entsprechende Säureanhydride (auch gemischte) eingesetzt werden. Der Neutralisationsgrad der optionalen olefinisch ungesättigten Säuren C) kann 0 % bis 100 %, bevorzugt 70 %bis 100 % betragen.

Weiterhin geeignet als Comonomere C) sind Ester ungesättigter Carbonsäuren, bevorzugt Acryl- und Methacrylsäure, Styrolsulfonsäure, Maleinsäure, Fumarsäure, Crotonsäure und Seneciosäure, mit aliphatischen, aromatischen oder cycloaliphatischen Alkoholen mit einer Kohlenstoffzahl von 1 bis 30.

Ebenfalls geeignete Comonomere C) sind offenkettige und cyclische N-Vinylamide (N-Vinyllactame) mit einer Ringgrösse von 4 bis 9 Atomen, bevorzugt N-Vinylformamid (NVF), N-Vinylmethylformamid, N-Vinylmethylacetamid (VIMA), N-Vinylacetamid, N-Vinylpyrrolidon (NVP), N-Vinylcaprolactam; Amide der Acryl- und der Methacrylsäure, besonders bevorzugt Acrylamid, N,N-Dimethylacrylamid, N,N-Diethylacrylamid, N,N-Diisopropylacrylamid; alkoxylierte Acryl- und Methacrylamide, bevorzugt Hydroxymethylmethacrylamid, Hydroxyethylmethacrylamid und Hydroxypropylmethacrylamid.

Ebenfalls geeignet sind Bernsteinsäuremono-[2-(methacryloyloxy)-ethyl]-ester; N,N-Dimethylaminomethacrylat; Diethylamino-methylmethacrylat; Acryl- und Methacrylamidoglykolsäure; [2-(Methacryloyloxy)ethyl]trimethylammoniumchlorid (MAPTAC) und [(2-Acryloyloxy)ethyl)]trimethylammoniumchlortid (APTAC); 2-Vinylpyridin; 4-Vinylpyridin; Vinylacetat; Methacrylsäureglycidylester; Acrylnitril; Vinylchlorid; Vinylidenchlorid; Diallyldimethylammoniumchlorid (DADMAC); Stearylacrylat; Laurylmethacrylat; und/oder Tetrafluorethylen.

Auch geeignet sind Methylenbisacryl- und -methacrylamid; Ester ungesättigter Mono-und Polycarbonsäuren mit Polyolen, z. B. Diacrylate oder Triacrylate wie Butandiol- und Ethylenglykoldiacrylat bzw. -methacrylat und Trimethylolpropantriacrylat; Allylverbindungen, z. B. Allyl(meth)acrylat, Triallylcyanurat, Maleinsäurediallylester, Polyallylester, Tetraallyloxyethan, Triallylamin, Tetraallylethylendiamin, Allylester der Phosphorsäure; und/oder Vinylphosphonsäurederivate.

Besonders bevorzugt für die Verwendung sind Polymere, herstellbar durch radikalische Copolymerisation von A) Acrylamidopropylmethylensulfonsäure (AMPS), dem Natriumsalz der Acrylamidopropylmethylensulfonsäure (AMPS) und/oder dem Ammoniumsalz der Acrylamidopropylmethylensulfonsäure, bevorzugt dem Ammoniumsalz der Acrylamidopropylmethylensulfonsäure (AMPS); B) einem oder oder mehreren Makromonomeren, ausgewählt aus der Gruppe der Ester gebildet aus Methacryl- oder Acrylsäure, bevorzugt Methacrylsäure, und Verbindungen der nachstehendenFormel

HO-(CH₂-CH₂-O)ₓ-R³

worin
- x: für eine Zahl zwischen 0 und 50, bevorzugt 1 und 50, besonders bevorzugt 5 und 30 steht; und
- R³: für einen C₁₀-C₂₂-Alkylrest steht;
und C) optional einem oder mehreren Comonomeren ausgewählt aus der Gruppe Acrylamid, Vinylformamid, N-Vinylmethylacetamid, Natriummethallylsulfonat, Hydroxyethylmethacrylat, Acrylsäure, Methacrylsäure, Maleinsäureanhydrid, Methacrylamid, Vinylacetat, N-Vinylpyrrolidon, Vinylphosphonsäure, Styrol, Styrolsulfonsäure (Na-Salz), t-Butylacrylat und Methylmethacrylat, bevorzugt Methacrylsäure und/oder Methacrylamid.

Insbesondere geeignet als Makromonomere B) sind Ester gebildet aus Acryl- oder Methacrylsäure und Alkylethoxylaten ausgewählt aus der Gruppe C₁₀-C₁₈-Fettalkoholpolyglykolether mit 8 EO-Einheiten (Genapol® C-080); C₁₁-Oxoalkoholpolyglykolether mit 8 EO-Einheiten (Genapol® UD-080); C₁₂-C₁₄-Fettalkoholpolyglykolether mit 7 EO-Einheiten (Genapol® LA-070); C₁₂-C₁₄-Fettalkoholpolyglykolether mit 11 EO-Einheiten (Genapol® LA-110); C₁₆-C₁₈-Fettalkoholpolyglykolether mit 8 EO-Einheiten (Genapol® T-080); C₁₆-C₁₈-Fettalkoholpolyglykolether mit 15 EO-Einheiten (Genapol® T-150); C₁₆-C₁₈-Fettalkoholpolyglykolether mit 11 EO-Einheiten (Genapol® T-110); C₁₆-C₁₈-Fettalkoholpolyglykolether mit 20 EO-Einheiten (Genapol® T-200); C₁₆-C₁₈-Fettalkoholpolyglykolether mit 25 EO-Einheiten (Genapol® T-250); C₁₈-C₂₂-Fettalkoholpolyglykolether mit 25 EO-Einheiten; iso-C₁₆-C₁₈-Fettalkoholpolyglykolether mit 25 EO-Einheiten; und C₂₂-Fettalkoholpolyglykolether mit 25 EO-Einheiten (Mergital® B25).

Hierbei stehen die EO-Einheiten für Ethylenoxid-Einheiten. Bei den Genapol®-Typen handelt es sich um Produkte der Firma Clariant, bei Mergital® B25 um ein Produkt der Firma Cognis.

Ebenfalls besonders bevorzugt sind Polymere, herstellbar durch radikalische Copolymerisation von A) Acrylamidopropylmethylensulfonsäure (AMPS), dem Natriumsalz der Acrylamidopropylmethylensulfonsäure (AMPS) und/oder dem Ammoniumsalz der Acrylamidopropylmethylensulfonsäure, bevorzugt dem Ammoniumsalz der Acrylamidopropylmethylensulfonsäure (AMPS); B) einem oder oder mehreren Makromonomeren, ausgewählt aus der Gruppe der Ester gebildet aus Acrylsäure oder Methacrylsäure, bevorzugt Methacrylsäure, und Verbindungen der nachstehenden Formel

HO-(CH₂-CH₂-O)ₓ-R³

worin
- x: für eine Zahl zwischen 0 und 50, bevorzugt 1 und 50, besonders bevorzugt 5 und 30 steht, und
- R³: für einen Poly(C₁-C₂₂-alkyl)-phenylrest, bevorzugt für einen Tris(sec-butyl)-phenylrest oder für einen Tris(n-butyl)-phenylrest, besonders bevorzugt für einen 2,4,6-Tris(sec-butyl)-phenylrest, Tris(styryl)-phenylrest oder insbesondere einen 2,4,6-Tris(1-phenylethyl)-phenylrest, steht;
und C) optional einem oder mehreren Comonomeren ausgewählt aus Acrylamid, N-Vinylformamid, N-Vinylmethylacetamid und Natriummethallylsulfonat, Hydroxyethylmethacrylat, Acrylsäure, Methacrylsäure, Maleinsäureanhydrid, Methacrylamid, Vinylacetat, N-Vinylpyrrolidon, Vinylphosphonsäure, Styrol, Styrolsulfonsäure (Na-Salz), tert-Butylacrylat, Methylmethacrylat, bevorzugt Methacrylsäure und/oder Methacrylamid.

Der Gewichtsanteil der Makromonomeren B) im Polymer kann zwischen 0,1 und 99,9 Gew-% variieren. In einer bevorzugten Ausführungsform sind die Polymere hoch hydrophob modifiziert, d. h. der Anteil an Makromonomeren B) beträgt 50,1 bis 99,9 Gew.-%, bevorzugt 70 bis 95 Gew.-%, besonders bevorzugt 80 bis 94 Gew.-%. In einer weiteren bevorzugten Ausführungsform sind die Polymere niedrig hydrophob modifiziert, d. h. der Anteil an Makromonomeren B) beträgt 0,1 bis 50 Gew.-%, bevorzugt 5 bis 25 Gew.-%, besonders bevorzugt 6 bis 20 Gew.-%.

Die Monomerenverteilung des Monomere A), B) und C) in den Polymeren kann alternierend, statistisch, gradientenartig oder blockartig (auch multiblock) sein. Das zahlenmittlere Molekulargewicht der Polymere beträgt bevorzugt 1000 bis 20 000 000 g/mol, bevorzugt 20 000 bis 5 000 000 g/mol, insbesonders bevorzugt 50 000 bis 1 500 000 g/mol.

In einer bevorzugten Ausführungsform sind die Polymere vernetzt, d. h. in das Polymer ist mindestens ein Vernetzer mit mindestens zwei Doppelbindungen einpolymerisiert.

Bevorzugte Vernetzer sind Methylenbisacryl- und -methacrylamid; Ester ungesättigter Mono- oder Polycarbonsäuren mit Polyolen, bevorzugt Diacrylate und Triacrylate, z. B. Butandiol- und Ethylenglykoldiacrylat bzw. -methacrylat und Trimethylolpropantriacrylat, Allylverbindungen, bevorzugt Allyl(meth)acrylat, Triallylcyanurat, Maleinsäurediallylester, Polyallylester, Tetraallyloxyethan, Triallylamin, Tetraallylethylendiamin, Allylester der Phosphorsäure; und/oder Vinylphosphonsäurederivate

Die Polymere können durch radikalische Copolymerisation, z. B. Fällungspolymerisation, Emulsionspolymerisation, Lösungspolymerisation oder Suspensionspolymerisation hergestellt. Besonders geeignet sind Polymere die durch Fällungspolymerisation, bevorzugt in tert.-Butanol, hergestellt wurden. Mit Hilfe der Fällungspolymerisation in tert-Butanol lässt sich im Vergleich zu anderen Lösungsmittel eine spezifische Partikelgrößenverteilung der Polymere erreichen. Die Größenverteilung der Polymerpartikel kann z. B. durch Laserbeugung oder Siebanalyse bestimmt werden. Repräsentativ für eine günstige Grössenverteilung ist die folgende Korngrößenverteilung, wie sie durch Siebanalyse bestimmt wurde: 60,2% kleiner 423 Mikrometer, 52,0% kleiner 212 Mikrometer, 26,6% kleiner 106 Mikrometer, 2,6% kleiner 45 Mikrometer und 26,6% grösser 850 Mikrometer.

Insbesondere ist der wenigstens eine elektrolytempfindlichen Verdicker ausgewählt unter Copolymeren von
(a) Acryloyldimethyltaurinsäure (2-Acrylamido-2-methyl-1-propansulfonsäure; Acrylamidopropylmethylensulfonsäure; AMPS) und/oder Salzen davon mit
(b) wenigstens einem olefinisch ungesättigten, nicht kationischen, gegebenenfalls vernetzenden, gegebenenfalls thermosensitiven Comonomer, das wenigstens ein Sauerstoff-, Stickstoff-, Schwefel- oder Phosphoratom aufweist und ein Molekulargewicht von höchsten 500 besitzt; und/oder
(c) wenigstens einem olefinisch ungesättigten, kationischen Comonomer, das wenigstens ein Sauerstoff-, Stickstoff-, Schwefel- oder Phosphoratom aufweist und ein Molekulargewicht von höchsten 500 besitzt; und/oder
(d) wenigstens einem olefinisch ungesättigten siliziumhaltigen Comonomer; und/oder
(e) wenigstens einem olefinisch ungesättigten fluorhaltigen Comonomer; und/oder
(f) wenigstens einem, gegebenenfalls thermosensitiven, Makromer, das ein zahlenmittleren Molekulargewicht von wenigstens 200 besitzt; und/oder
(g) wenigstens einem polymeren Additiv mit einem zahlenmittleren Molekulargewicht von 200 bis 1·10⁹.

Dabei gilt die Maßgabe, dass Komponente (a) mit wenigstens einer der Komponenten (b) bis (g) copolymerisiert ist.

Solche Polymere sind grundsätzlich bekannt und beispielsweise in WO 02/44230 beschrieben.

Die Copolymere besitzen bevorzugt ein Molekulargewicht von 10³ g/mol bis 10⁹ g/mol, besonders bevorzugt von 10⁴ bis 10⁷ g/mol, insbesondere bevorzugt 5·10⁴ bis 5·10⁶ g/mol.

Bei den Salzen der Acryloyldimethyltaurinsäure kann es sich um die anorganischen oder organischen Salze handeln. Bevorzugt werden die Li⁺-, Na⁺-, K⁺-, Mg²⁺-, Ca²⁺-, Al³⁺- und/oder NH₄⁺-Salze. Ebenfalls bevorzugt sind die Monoalkylammonium-, Dialkylammonium-, Trialkylammonium-und/oder Tetraalkylammoniumsalze, wobei es sich bei den Alkylsubstituenten der Amine unabhängig voneinander um C₁-C₂₂-Alkylreste handeln kann, die gegebenenfalls mit bis zu drei C₂-C₁₀-Hydroxyalkylgruppen besetzt sein können. Weiterhin sind auch ein- bis dreifach ethoxylierte Ammoniumverbindungen mit unterschiedlichem Ethoxylierungsgrad bevorzugt. Es sollte angemerkt werden, dass auch Mischungen von zwei- oder mehreren der oben genannten Vertreter oder die freie Acryloyldimethyltaurinsäure im Sinne der Erfindung sind.

Der Neutralisationsgrad der Acryloyidimethyltaurinsäure in den Copolymeren kann zwischen 0 und 100 % betragen, besonders bevorzugt ist ein Neutralisationsgrad von oberhalb 80 %.

Bezogen auf die Gesamtmasse der Copolymere kann der Gehalt an Acryloyldimethyltaurinsäure bzw. Acryloyldimethyltauraten 0,1 bis 99,9 Gew.-%, bevorzugt 20 bis 99,5 Gew.-%, besonders bevorzugt 50 bis 98 Gew.-% betragen.

Als Comonomere (b) können alle olefinisch ungesättigten, nicht kationischen Monomere eingesetzt werden, deren Reaktionsparameter eine Copolymerisation mit Acryloyldimethyltaurinsäure und/oder Acryloyldimethyltauraten in den jeweiligen Reaktionsmedien erlauben. Bevorzugt sind ungesättigte Carbonsäuren und deren Anhydride und Salze sowie deren Ester mit aliphatischen, olefinischen, cycloaliphatischen, arylaliphatischen oder aromatischen Alkoholen mit einer Kohlenstoffzahl von 1 bis 22. Als ungesättigte Carbonsäuren besonders bevorzugt sind Acrylsäure, Methacrylsäure, Styrolsulfonsäure, Maleinsäure, Fumarsäure, Crotonsäure, Itaconsäure und Seneciosäure. Weiterhin bevorzugt sind offenkettige N-Vinylamide, bevorzugt N-Vinylformamid (VI-FA), N-Vinylmethylformamid, N-Vinylmethylacetamid (VIMA) und N-Vinylacetamid; cyclische N-Vinylamide (N-Vinyllactame) mit einer Ringgröße von 3 bis 9, bevorzugt N-Vinylpyrrolidon (NVP) und N-Vinylcaprolactam; Amide der Acryl-und Methacrylsäure, bevorzugt Acrylamid, Methacrylamid, N,N Dimethylacrylamid, N,N-Diethylacrylamid und N,N-Diisopropylacrylamid; alkoxylierte Acryl- und Methacrylamide, bevorzugt Hydroxymethylacrylamid, Hydroxyethylacrylamid, Hydroxypropylacrylamid, Hydroxymethylmethacrylamid, Hydroxyethylmethacrylamid, und Hydroxypropylmethacrylamid; Bernsteinsäuremono-[2-(methacryloyloxy)-ethylester]; N,N-Dimethylaminomethacrylat; Diethylamino-methylmethacrylat; Acryl- und Methacrylamidoglykolsäure; 2-und 4-Vinylpyridin; Vinylacetat; Methacrylsäureglycidylester; Styrol; Acrylnitril; Vinylchlorid; Stearylacrylat; Laurylmethacrylat; Vinylidenchlorid; und/oder Tetrafluorethylen. Ebenfalls geeignet sind anorganische Säuren und deren Salze und Ester. Bevorzugte Säuren sind Vinylphosphonsäure, Vinylsulfonsäure, Allylphosphonsäure und Methallylsulfonsäure. Bezüglich geeigneter Salze gilt das zuvor Gesagte.

Beispiele für Comonomere (b) sind: N,N Diisopropylacrylamid, N-Vinylpyrrolidon (NVP), Methacrylsäure, Vinylacetat und Vinylalkohol.

In einer weiteren bevorzugten Ausführungsform sind die Copolymere vernetzt, d. h. sie enthalten Comonomere (b) mit mindestens zwei polymerisationsfähigen Vinylgruppen. Bevorzugte Vernetzer sind Methylenbisacrylamid; Methylenbismethacrylamid; Ester ungesättigter Mono-und Polycarbonsäuren mit Polyolen, bevorzugt Diacrylate und Triacrylate bzw. -methacrylate, besonders bevorzugt Butandiol- und Ethylenglykoldiacrylat bzw. -methacrylat, Trimethylolpropantriacrylat (TMPTA) und Trimethylolpropantrimethacrylat (TMPTMA); Allylverbindungen, bevorzugt Allyl(meth)acrylat, Triallylcyanurat, Maleinsäurediallylester, Polyallylester, Tetraallyloxyethan, Triallylamin, Tetraallylethylendiamin; Allylester der Phosphorsäure; und/oderVinylphosphonsäurederivate. Insbesondere bevorzugt als Vernetzer ist Trimethylolpropantriacrylat (TMPTA).

Der Gewichtsanteil der Comonomere (b), bezogen auf die Gesamtmasse der Copolymere, kann 0 bis 99,9 Gew.-% betragen und beträgt bevorzugt 0,05 bis 80 Gew.-%, besonders bevorzugt 0,05 bis 70 Gew.-%.

Als Comonomere (c) kommen alle olefinisch ungesättigten Monomere mit kationischer Ladung in Frage, die in der Lage sind, in den gewählten Reaktionsmedien mit Acryloyidimethyltaurinsäure oder deren Salze Copolymere zu bilden.Die dabei resultierende Verteilung der kationischen Ladungen über die Ketten hinweg kann statistisch, alternierend, block- oder gradientenartig sein. Es sei darauf hingewiesen werden, dass unter den kationischen Comonomeren (c) auch solche zu verstehen sind, die die kationische Ladung in Form einer betainischen Struktur tragen. Comonomere (c) im Sinne der Erfindung sind auch aminofunktionalisierte Precursors, die durch polymeranaloge Reaktionen (z. B. Reaktion mit DMS) in ihre entsprechenden quaternären Derivate überführt werden können. Besonders bevorzugt als Comonomere (c) sind Diallyldimethylammoniumchlorid (DADMAC), [2-(Methacryloyloxy)ethyl]trimethylammoniumchlorid (MAPTAC), [2-(Acryloyloxy)ethyl]trimethylammoniumchlorid, [2-Methacrylamidoethyl]trimethylammoniumchlorid, [2-(Acrylamido)ethyl]trimethylammoniumchlorid, N-Methyl-2-vinylpyridiniumchlorid und/oder N-Methyl-4-vinylpyridiniumchlorid.

Der Gewichtsanteil der Comonomeren (c) beträgt, bezogen auf die Gesamtmasse der Copolymere, bevorzugt 0,1 bis 99,8 Gew.-%, besonders bevorzugt 0,5 bis 30 Gew.-% und insbesondere bevorzugt 1 bis 20 Gew.-%.

Als polymerisationsfähige, siliziumhaltige Komponenten (d) sind alle mindestens einfach olefinisch ungesättigten Verbindungen geeignet, die unter den jeweils gewählten Reaktionsbedingungen zur radikalischen Copolymerisation befähigt sind. Dabei muss die Verteilung der einzelnen silikonhaltigen Monomere über die entstehenden Polymerketten hinweg nicht notwendigerweise statistisch erfolgen. Auch die Ausbildung von beispielsweise block- (auch multiblock-) oder gradientenartigen Strukturen ist geegnet. Kombinationen von zwei oder mehreren unterschiedlichen silikonhaltigen Vertretern sind auch möglich. Die Verwendung von silikonhaltigen Komponenten mit zwei oder mehr polymerisationsaktiven Gruppen führt zum Aufbau verzweigter oder vernetzter Strukturen. Bevorzugte siliziumhaltige Komponenten (d) sind solche gemäß folgender Formel

R¹-Y-[(Si(R³R⁴)-O-)_{w}-(Si(R⁵R⁶)-O)ₓ-]-R²

worin
- R¹: für eine olefinisch ungesättigte Gruppe, vorzugsweise für einen Vinyl-, Allyl-, Methallyl-, Methylvinyl-, Acryl-, Methacryl-, Crotonyl-, Senecionyl-, Itaconyl-, Maleinyl-, Fumaryl- oder Styrylrest, besonders bevorzugt für einen Acryl- oder Methacrylrest steht;
- Y: für ein Brückenglied, vorzugsweise für -O-,-C(O)-,-C(O)-O-, -S-,-O-CH₂-CH(O-)-CH₂OH, -O-CH₂-CH (OH)-CH₂-O-, -O-SO₂-O-, -O-S(O)-O-,-PH-, -P(CH₃)-,-PO₃-,-NH-, -N(CH₃)-, -O-(C₁-C₅₀-Alkyl)-O-, -O-Phenyl-O-, -O-Benzyl-O-, -O-(C₅-C₈-Cycloalkyl)-O-, -O-(C₁-C₅₀-Alkenyl)-O-, -O-(CH(CH₃)-CH₂-O)ₙ-, -O-(CH₂-CH₂-O)ₙ-, -O-([CH(CH₃)-CH₂-O]ₙ-[CH₂-CH₂-O]ₘ)ₒ-, wobei n, m und o unabhängig voneinander Zahlen von 0 bis 200 bedeuten und die Verteilung der Ethylenoxid-(CH₂-CH₂-O) und Ppropylenoxid-Einheiten (CH(CH₃)-CH₂-O) statistisch oder blockförmig sein kann, steht;
- R³, R⁴, R⁵ und R⁶: unabhängig voneinander für CH₃, OCH₃, C₆H₅ oder OC₆H₅ stehen;
- w und x: für stöchiometrische Koeffizienten stehen, die unabhängig voneinander 0 bis 500, bevorzugt 10 bis 250, betragen; und
- R²: für einen aliphatischen, olefinischen, cycloaliphatischen, arylaliphatischen oder aromatischen linearen oder verzweigten C₁-C₅₀-Kohlenwasserstoffrest oder für OH, -NH₂, -N(CH₃)₂, R⁷ oder für die Struktureinheit [-Y-R¹] steht, worin Y und R¹ wie oben definiert sind und R⁷ für eine Si-haltige Gruppe, bevorzugt für -O-Si(CH₃)₃, -O-Si(Ph)₃, -O-Si(O-Si(CH₃)₃)₂CH₃) oder -O-Si(O-Si(Ph)₃)₂Ph) steht.

Die Verteilung der Wiederholungseinheiten über die Kette hinweg kann nicht nur rein statistisch, sondern auch blockartig, alternierend oder gradientenartig sein. Formel (I) beschreibt nicht nur vinylisch funktionalisierte, silikonhaltige Polymerspezies mit einer polymertypischen Verteilung, sondern auch definierte Verbindungen mit diskreten Molekulargewichten.

Wenn R² ein Element der Gruppe [-Y-R¹] darstellt, handelt es sich um difunktionelle Monomere, die zur Vernetzung der entstehenden Polymerstrukturen herangezogen werden können.

Besonders bevorzugt als siliziumhaltige Komponenten (d) sind die folgenden acrylisch-oder methacrylisch modifizierten Verbindungen: 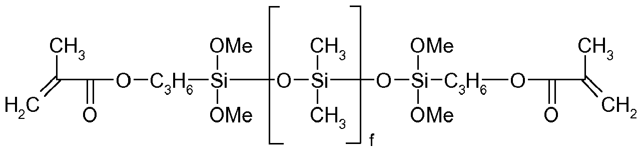 Methacryloxyproplydimethylsilyl endgeblockte Polydimethylsiloxane mit f = 10 bis 500, bevorzugt 10 bis 250; 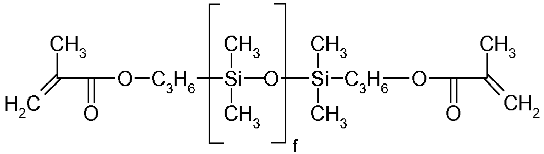 Methacryloxypropyl endgeblockte Polydimethylsiloxane mit f = 10 bis 500, bevorzugt 10 bis 250; und 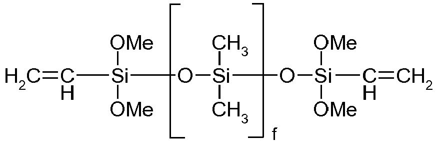 Vinyldimethoxysilyl endgeblockte Polydimethylsiloxane mit f = 10 bis 500, bevorzugt 10 bis 250.

Bezogen auf die Gesamtmasse der Copolymere können geeignete siliziumhaltige Komponenten bis 99,8 Gew.-%, bevorzugt 0,5 bis 30 Gew.-%, insbesondere bevorzugt, 1 bis 20 Gew.-% enthalten sein.

Als polymerisationsfähige, fluorhaltige Komponenten (e) sind alle mindestens einfach olefinisch ungesättigten Verbindungen geeignet, die unter den jeweils gewählten Reaktionsbedingungen zur radikalischen Copolymerisation befähigt sind. Dabei muss die Verteilung der einzelnen fluorhaltigen Monomere über die entstehenden Polymerketten hinweg nicht notwendigerweise statistisch erfolgen. Auch die Ausbildung von beispielsweise block- (auch multiblock-) oder gradientenartigen Strukturen ist geeignet. Kombinationen von zwei oder mehreren unterschiedlichen, fluorhaltigen Komponenten (e) ist auch möglich, wobei dem Fachmann klar ist, dass monofunktionelle Vertreter zur Bildung kammförmiger Strukturen führen, wohingegen di-, tri-, oder polyfunktionelle Komponenten (e) zu zumindest teilvernetzten Strukturen führen. Bevorzugte fluorhaltige Komponenten E) sind solche gemäß folgender Formel:

R¹-Y-CᵣH₂ᵣCₛF₂ₛCF₃

worin
- R¹: für eine olefinisch ungesättigte Gruppe, vorzugsweise für einen Vinyl-, Allyl-, Methallyl-, Methylvinyl-, Acryl-, Methacryl-, Crotonyl-, Senecionyl-, Itaconyl-, Maleinyl-, Fumaryl- oder Styrylrest, besonders bevorzugt für einen Acryl- oder Methacrylrest steht;
- Y: für ein Brückenglied, vorzugsweise für -O-,-C(O)-,-C(O)-O-, -S-,-O-CH₂-CH(O-)-CH₂OH, -O-CH₂-CH (OH)-CH₂-O-, -O-SO₂-O-, -O-S(O)-O-,-PH-, -P(CH₃)-,-PO₃-,-NH-, -N(CH₃)-, -O-(C₁-C₅₀-Alkyl)-O-, -O-Phenyl-O-, -O-Benzyl-O-, -O-(C₅-C₈-Cycloalkyl)-O-, -O-(C₁-C₅₀-Alkenyl)-O-, -O-(CH(CH₃)-CH₂-O)ₙ-, -O-(CH₂-CH₂-O)ₙ-, -O-([CH(CH₃)-CH₂-O]ₙ-[CH₂-CH₂-O]ₘ)ₒ-, wobei n, m und o unabhängig voneinander Zahlen von 0 bis 200 bedeuten und die Verteilung der Ethylenoxid- (CH₂-CH₂-O) und Ppropylenoxid-Einheiten (CH(CH₃)-CH₂-O) statistisch oder blockförmig sein kann, steht; und
- r und s: für stöchiometrische Koeffizienten stehen, die unabhängig voneinander 0 bis 200 betragen.

Bevorzugte fluorhaltige Komponenten (e) gemäß obiger Formel sind Perfluorhexylethanol-methacrylat, Perfluorhexylpropanol-methacrylat, Perfluoroctylethanolmethacrylat, Perfluoroctylpropanol-methacrylat, Perfluorhexylethanolylpolygycolethermethacrylat, Perfluorhexyl-propanolyl-poly-[ethylenglykol-co-propylenglycolether]-acrylat, Perfluoroctylethanolyl-poly-[ethylenglykol-block-co-propylenglycolether]-methacrylat, Perfluoroctylpropanolyl-polypropylen-glycolether-methacrylat.

Bezogen auf die Gesamtmasse der Copolymere kann der Anteil an fluorhaltigen Komponenten bis 99,8 Gew.-%, bevorzugt 0,5 bis 30 Gew.-%, insbesondere bevorzugt 1 bis 20 Gew.-%, betragen.

Bei den Makromonomeren (f) handelt es sich um mindestens einfach olefinisch funktionalisierte Polymere mit einer oder mehreren diskreten Wiederholungseinheiten und einem zahlenmittleren Molekulargewicht größer oder gleich 200 g/mol. Bei der Copolymerisation können auch Mischungen chemisch unterschiedlicher Makromonomere (f) eingesetzt werden. Bei den Makromonomeren handelt es sich um polymere Strukturen, die aus einer oder mehreren Wiederholungseinheit(en) aufgebaut sind und eine für Polymere charakteristische Molekulargewichtsverteilung aufweisen. Bevorzugt als Makromonomere () sind Verbindungen gemäß folgender Formel:

R¹-Y-[(A)ᵥ-(B)_{w}-(C)ₓ-(D)_{z}]-R²

worin
- R¹: für eine olefinisch ungesättigte Gruppe, vorzugsweise für einen Vinyl-, Allyl-, Methallyl-, Methylvinyl-, Acryl-, Methacryl-, Crotonyl-, Senecionyl-, Itaconyl-, Maleinyl-, Fumaryl- oder Styrylrest steht;
- Y: für ein Brückenglied, vorzugsweise für -O-,-C(O)-,-C(O)-O-, -S-,-O-CH₂-CH(O-)-CH₂OH, -O-CH₂-CH(OH)-CH₂-O-, -O-SO₂-O-, -O-S(O)-O-,-PH-, -P(CH₃)-,-PO₃-,-NH- und -N(CH₃)-, bevorzugt -O-, steht;
- A, B, C und D: für Wiederholungseinheiten stehen und sich vorzugsweise von Acrylamid, Methacrylamid, Ethylenoxid, Propylenoxid, AMPS, Acrylsäure, Methacrylsäure, Methylmethacrylat, Acrylnitril, Maleinsäure, Vinylacetat (Vinylalkohol), N Vinylpyrrolidinon, N-Vinylcaprolactam, Styrol, 1,3-Butadien, Isopren, Isobuten, Diethylacrylamid oder Diisopropylacrylamid ableiten;
- v, w, x und z: für stöchiometrische Koeffizienten stehen, die unabhängig voneinander 0 bis 500, bevorzugt 1 bis 30 betragen, wobei die Summe der vier Koeffizienten im Mittel ≥ 1 ist; und
- R²: für einen aliphatischen, olefinischen, cycloaliphatischen, arylaliphatischen oder aromatischen linearen oder verzweigten C₁-C₅₀-Kohlenwasserstoffrest oder für OH, -NH₂, -N(CH₃)₂ oder für die Struktureinheit [-Y-R¹] steht, worin Y und R¹ wie oben definiert sind.

Die Verteilung der Wiederholungseinheiten über die Makromonomerkette kann statistisch, blockartig, alternierend oder gradientenartig sein.

Wenn R² ein Element der Gruppe [-Y-R¹] darstellt, handelt es sich um difunktionelle Makromonomere, die zur Vernetzung der Copolymere geeignet sind.

Besonders bevorzugt als Makromonomere (f) sind acrylisch-oder methacrylisch monofunktionalisierte Alkylethoxylate gemäß folgender Formel: 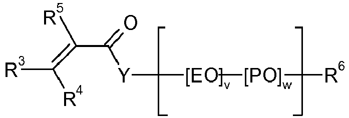 worin
- R³, R⁴, R⁵ und R⁶: unabhängig voneinander für Wasserstoff oder n-aliphatische, isoaliphatische, olefinische, cycloaliphatische, arylaliphatische oder aromatische C₁-C₃₀-Kohlenwasserstoffreste stehen;
- Y: für eines der oben genannten Brückenglieder steht; und
- v und w: für stöchiometrischen Koeffizienten betreffend die Ethylenoxideinheiten (EO) und Propylenoxideinheiten (PO) stehen und unabhängig voneinander 0 bis 500, bevorzugt 1 bis 30 betragen, wobei die Summe aus v und w im Mittel ≥ 1 ist.

Bevorzugt stehen R³ und R⁴ für H oder CH₃, besonders bevorzugt für H; R⁵ steht vorzugsweise für H oder CH₃; und R⁶ steht vorzugsweise für einen n-aliphatischen, isoaliphatischen, olefinischen, cycloaliphatischen, arylaliphatischen oder aromatischen C₁-C₃₀-Kohlenwasserstoffrest.

Bevorzugt beträgt das Molekulargewicht der Makromonomeren (f) 200 g/mol bis 10⁶ g/mol, besonders bevorzugt 200 bis 10⁵ g/mol und insbesondere bevorzugt 200 bis 10000 g/mol.

Bezogen auf die Gesamtmasse der Copolymere können geeignete Makromonomere in einem Anteil von bis zu 99,8 Gew.-% enthalten sein. Bevorzugt finden die Bereiche 0,5 bis 30 Gew.-% und 70 bis 99,5 Gew.-% Anwendung. Besonders bevorzugt sind Anteile von 1 bis 20 Gew.-% und 65 bis 95 Gew.-%.

Die Verteilung der EO-und PO-Einheiten über die Makromonomerkette kann statistisch, blockartig, alternierend oder gradientenartig sein.

In einer Ausführungsform wird die Copolymerisation in Gegenwart mindestens eines polymeren Additivs (g) durchgeführt, wobei das Additiv (g) vor der eigentlichen Copolymerisation dem Polymerisationsmedium ganz- oder teilweise gelöst zugegeben wird. Die Verwendung von mehreren Additiven G) ist ebenfalls geeignet. Vernetzte Additive (g) können ebenfalls verwendet werden. Die Additive (g) bzw. deren Mischungen müssen lediglich ganz oder teilweise im gewählten Polymerisationsmedium löslich sein. Während des eigentlichen Polymerisationsschrittes hat das Additiv (g) mehrere Funktionen. Einerseits verhindert es im eigentlichen Polymerisationsschritt die Bildung übervernetzter Polymeranteile im sich bildenden Copolymerisat und andererseits wird das Additiv (g) gemäß dem allgemein bekannten Mechanismus der Pfropf-Copolymerisation statistisch von aktiven Radikalen angegriffen. Dies führt dazu, dass je nach Additiv G) mehr oder weniger große Anteile davon in die Copolymere eingebaut werden. Zudem besitzen geeignete Additive (g) die Eigenschaft, die Lösungsparameter der sich bildenden Copolymere während der radikalischen Polymerisationsreaktion derart zu verändern, dass die mittleren Molekulargewichte zu höheren Werten verschoben werden. Verglichen mit analogen Copolymeren, die ohne den Zusatz der Additive (g) hergestellt wurden, zeigen solche, die unter Zusatz von Additiven G) hergestellt wurden, vorteilhafterweise eine signifikant höhere Viskosität in wässriger Lösung. Bevorzugt als Additive G) sind in Wasser und/oder Alkoholen lösliche Homo- und Copolymere. Unter Copolymeren sind dabei auch solche mit mehr als zwei verschiedenen Monomertypen zu verstehen. Besonders bevorzugt als Additive (g) sind Homo- und Copolymere aus Vinylacetat, Vinylbutyral, Vinylalkohol, N-Vinylformamid, N-Vinylacetamid, N-Vinylpyrrolidon, Ethylenoxid, Propylenoxid, Acryloyldimethyltaurinsäure, N-Vinylcaprolactam, N-Vinylmethylacetamid, Acrylamid, Acrylsäure, Methacrylsäure, N-Vinylmorpholin, Hydroxyethylmethacrylat, Diallyldimethylammoniumchlorid (DADMAC) und/oder [2-(Methacryloyloxy)ethyl]trimethylammoniumchlorid (MAPTAC); Polyalkylenglykole und/oder Alkylpolyglykole. Insbesondere bevorzugt als Additive (g) sind Polyvinylpyrrolidone (z. B. Luviskol K15®, K20® und K30® von BASF), Poly(N-Vinylformamide), Poly(N Vinylcaprolactame) und Copolymere aus N-Vinylpyrrolidon, N-Vinylformamid und/oder Acrylsäure, die auch teilweise oder vollständig verseift sein können.

Das Molekulargewicht der Additive (g) beträgt bevorzugt 10² bis 10⁷ g/mol, besonders bevorzugt 0,5·10⁴ bis 10⁶ g/mol.

Die Einsatzmenge des polymeren Additivs (g) beträgt, bezogen auf die Gesamtmasse der bei der Copolymerisation zu polymerisierenden Monomere, bevorzugt 0,1 bis 90 Gew.-%, besonders bevorzugt 1 bis 20 Gew.-% und insbesondere bevorzugt 1,5 bis 10 Gew.-%.

Speziell werden als Verdicker die Verdicker der Synergen® Y-Reihe von Clariant und insbesondere Synergen® Y 02 oder Synergen® Y 04 verwendet. Dies sind AMPSbasierte Copolymere wie sie in der WO 02/44230 beschrieben sind, worauf hiermit in vollem Umfang Bezug genommen wird.

Der wenigstens eine Verdicker ist in jeder gelförmigen Phase in einer Menge von vorzugsweise 0,001 bis 10 Gew.-%, besonders bevorzugt von 0,01 bis 5 Gew.-%, stärker bevorzugt von 0,02 bis 1 Gew.-% und insbesondere von 0,05 bis 0,5 Gew.-% und speziell von 0,05 bis 0,3 Gew.-%, bezogen auf das Gesamtgewicht der jeweiligen gelförmigen Phase, enthalten. In der Gelformulierung ist der wenigstens eine Verdicker in einer Menge von vorzugsweise 0,002 bis 10 Gew.-%, besonders bevorzugt von 0,02 bis 10 Gew.-%, stärker bevorzugt von 0,04 bis 2 Gew.-% und insbesondere von 0,1 bis 1 Gew.-% und speziell von 0,1 bis 0,6 Gew.-%, bezogen auf das Gesamtgewicht der Gelformulierung, enthalten.

Neben den inkompatiblen Stoffen A und B und dem wenigstens einen Verdicker kann die erfindungsgemäße Gelformulierung weitere Komponenten enthalten. Geeignete zusätzliche Komponenten hängen von der Natur und dem Einsatzzweck der Gelformulierung ab und sind dem Fachmann prinzipiell bekannt.

So kann die Gelformulierung, wenn es sich um eine Pflanzenschutzformulierung handelt, für solche Systeme übliche Bestandteile enthalten. Hierzu gehören beispielsweise Dispergiermittel, Entschäumer, Konservierungsmittel, Biozide, organische Lösungsmittel, Frostschutzmittel und dergleichen.

Geeignete Dispergiermittel oder oberflächenaktive Mittel sind vorzugsweise nicht ionisch. Grundsätzlich können sie von ähnlicher Natur wie die die oben beschriebenen Adjuvantien sein, wobei sie sich von diesen durch ein in der Regel höheres Molekulargewicht unterscheiden. Die höheren Molekulargewichte bewirken einerseits eine geringere Dynamik der Dispergiermittelmoleküle, weswegen die Adjuvanseigenschaften nur gering ausgeprägt sind, andererseits bewirkt das hohe Molekulargewicht eine hohe Affinität zu Phasengrenzflächen, die durch die Dispergiermittel dann effektiv stabilisiert werden können. Geeignete Molekulargewichte für Dispergiermittel bewegen sich im Rahmen von ca.1000 g/mol (z.B. phosphatiertes Tristyrylphenolethoxylat, wie Soprophor 3D33 von Rhodia) bis zu mehreren tausend g/mol bei Kammpolymeren (z.B. Atlox 4913 von Croda). Neben den bei den Adjuvantien genannten Substanzklassen sind als Dispergatoren weiterhin Alkylarylsulfonate, Alkylsulfate, Alkylsulfonate, Fettalkoholsulfate, sulfatierte Fettalkoholglykolether, Kondensate von sulfoniertem Naphthalin und sulfonierten Naphthalinderivaten mit Formaldehyd, Kondensate von Naphthalin oder Naphthalinsulfonsäure mit Phenol und Formaldehyd, Lignosulfit-Ablaugen und Methylcellulose geeignet. Die Dispergiermittel sind vorzugsweise in denjenigen Phasen enthalten, die ein Pflanzenschutzmittel umfassen.

Entschäumer sind vorzugsweise Silikon-basierte Entschäumer. Die Entschäumer sind vorzugsweise in allen Phasen enthalten, die ein Pflanzenschutzmittel oder ein Adjuvans umfassen.

Ein geeignetes Konservierungsmittel ist beispielsweise Dichlorophen. Auch die Konservierungsmittel sind vorzugsweise in denjenigen Phasen enthalten, die ein Pflanzenschutzmittel oder ein Adjuvans umfassen.

Geeignete Biozide sind beispielsweise Isothiazolinone, wie Benzylisothiazolinon und Methylisothiazolinon. Auch die Biozide sind vorzugsweise in denjenigen Phasen enthalten, die ein Pflanzenschutzmittel oder ein Adjuvans umfassen.

Geeignete Frostschutzmittel sind beispielsweise Glycerin, Ethylenglykol und Propylenglykol. Die Frostschutzmittel sind vorzugsweise in denjenigen Phasen enthalten, die ein Pflanzenschutzmittel umfassen.

Geeignete organische Lösungsmittel sind beispielsweise aliphatische und insbesondere aromatische Kohlenwasserstoffe, wie Benzol, Toluol, die Xylole, die Solvesso-Produkte oder Naphtha. Die Lösungsmittel sind vorzugsweise in denjenigen Phasen enthalten, die ein Adjuvans umfassen.

Ein spezielles Beispiel für eine erfindungsgemäße Gelformulierung ist wie folgt:

### 1. Hydrogel (Phase A):

| | |
|---|---|
| Pflanzenschutzmittel, z.B. Fungizid, beispielsweise Dimoxystrobin: | 10-20 Gew.-Teile |
| Pflanzenschutzmittel, z.B. Fungizid, beispielsweise Epoxiconazol: | 5-15 Gew.-Teile |
| Dispergiermittel, z.B. Polyethylenglykol/Polypropylenglykol - Blockcopolymer: | 1-5 Gew.-Teile |
| Dispergiermittel, z.B. Tristyrylphenolpolyglykolether: | 2-5 Gew.-Teile |
| Antischaummittel, z.B. Silikonemulsion: | 0,5-1 Gew.-Teile |
| Frostschutzmittel, z.B. 1,2-Propylenglykol: | 5-10 Gew.-Teile |
| Biozid, z.B. Benylisothiazolin-2-on/Methylisothiazolin-2-on: | 0,1-0,3 Gew.-Teile |
| Verdicker, z.B. Synergen Y 02 von Clariant: | 0,02-0,5 Gew.-Teile |
| Wasser: | ad 100 Gew.-Teile |

### 2. Hydrogel (Phase B):

| | |
|---|---|
| Adjuvans, z.B. C₁₀/C₁₈-Alkohol + 2-10 EO: | 8-20 Gew.-Teile |
| Lösungsmittel, z.B. Aromatengemisch, beispielsweise Naphtha: | 5-12 Gew.-Teile |
| Verdicker, z.B. Synergen Y 02 von Clariant: | 0,02-0,5 Gew.-Teile |
| Wasser: | ad 100 Gew.-Teile |

Die erfindungsgemäße Gelformulierung kann durch Elektrolytzusatz wieder in den flüssigen Aggregatzustand überführt werden. Geeignete Elektrolyte sind organische und anorganische Salze und insbesondere anorganische Salze. Geeignete anorganische Salze sind beispielsweise Alkalimetallhalogenide, wie Natriumchlorid, Natriumbromid, Kaliumchlorid oder Kaliumbromid, Alkalimetallsulfate, wie Natriumsulfat oder Kaliumsulfat, Alkalimetallnitrate, wie Natriumnitrat und Kaliumnitrat, Erdalkalimetallhalogenide, wie Calciumchlorid oder Magnesiumchlorid, und Erdalkalimetallsulfate, wie Magnesiumsulfat. Geeignete organische Salze sind beispielsweise Ammoniumverbindungen, wie Trimethylammoniumchlorid, Tetramethylammoniumchlorid, Triethylammoniumchlorid, Tetraethylammoniumchlorid, Triethanolammoniumchlorid und dergleichen, Säureadditionssalze an Stickstoff-haltige Heterocyclen, wie Pyridiniumchlorid, Imidazoliumchlorid, Pyrrolidiniumchlorid, Piperidiniumchlorid und dergleichen, Carbonsäuresalze, wie Natriumacetat, Natriumtriflat, Natriumpropionat und dergleichen, Sulfonsäuresalze und dergleichen.

Ein weiterer Gegenstand der Erfindung ist ein Verfahren zur Herstellung der erfindungsgemäßen Gelformulierung, umfassend folgende Schritte:
(i) Herstellen eines formstabilen Gels, das wenigstens einen Stoff A, ein Dispergiermedium für den wenigstens einen Stoff A und wenigstens einen elektrolytempfindlichen, bevorzugt vollsynthetischen, Verdicker umfasst;
(ii) Herstellen eines formstabilen Gels, das wenigstens einen Stoff B, ein Dispergiermedium für den wenigstens einen Stoff B und wenigstens einen elektrolytempfindlichen, bevorzugt vollsynthetischen, Verdicker umfasst;
(iii) gegebenenfalls Herstellen eines formstabilen Gels, das wenigstens einen Stoff C, ein Dispergiermedium für den wenigstens einen Stoff C und wenigstens einen elektrolytempfindlichen, bevorzugt vollsynthetischen, Verdicker umfasst, wobei der wenigstens eine Stoff C wenigstens einer der Stoffe A, wenigstens einer der Stoffe B oder ein von diesen verschiedener Stoff ist;
(iv) gegebenenfalls ein- oder mehrfaches Wiederholen des Schritts (iii); und
(v) Anordnen der in den Schritten (i), (ii), gegebenenfalls (iii) und gegebenenfalls (iv) erhaltenen Gele in einem Gefäß.

Für den Fall, dass der wenigstens eine Stoff A, der wenigstens eine Stoff B oder der wenigstens eine Stoff C nicht im Dispergiermedium löslich ist, erfolgt das Herstellen des formstabilen Gels in Schritt (i), (ii) oder (iii) vorzugsweise so, dass man eine Dispersion, vorzugsweise eine Suspension, besonders bevorzugt ein Suspensionskonzentrat oder eine Suspoemulsion, welche(s) den wenigstens einen Stoff A, B oder C in Form einer Dispersion (vorzugsweise Suspension) in einem flüssigen Dispergiermedium (vorzugsweise in einem wässrigen Medium) umfasst, herstellt, diese gewünschtenfalls auf die gewünschte Partikelgröße des dispergierten Stoffs A, B oder C bringt, beispielsweise durch Mahlen in einer geeigneten Mühle, z.B. Kolloidmühle oder Rührwerksmühle (Perlmühle), und anschließend die erhaltene Dispersion mit dem wenigstens einen elektrolytempfindlichen Verdicker in einer solchen Menge versetzt, dass die gewünschte Viskosität erreicht wird.

Ist der wenigstens eine Stoff A, der wenigstens eine Stoff B oder der wenigstens eine Stoff C im Dispergiermedium löslich (dieses wird in diesem Fall entsprechend als Lösungsmittel bezeichnet), erfolgt das Herstellen des formstabilen Gels in Schritt (i), (ii) oder (iii) vorzugsweise so, dass man eine Lösung des Stoffs A, B oder C in diesem Lösungsmittel herstellt und die erhaltene Lösung dann mit dem wenigstens einen elektrolytempfindlichen Verdicker in einer solchen Menge versetzt, dass die gewünschte Viskosität erreicht wird.

Das Anordnen der einzelnen Gelphasen hängt von der Gefäßform ab, in der die erfindungsgemäße Gelformulierung gelagert werden soll und ist im Prinzip beliebig. Auch die Art des Gefäßes ist grundsätzlich beliebig. Ein spezielles Beispiel ist die Verwendung einer Mehrkomponenten-Kartusche, wie sie in der DE-A-102005021076 beschrieben ist.

Bei Stoffen A und B, bei denen schon bei Diffusion geringster Mengen zu Kompatibilitätsproblemen führt, kann es vorteilhaft sein, die jeweiligen Phasen physikalisch zu trennen, beispielsweise durch eine Trennwand oder durch eine Trennfolie, wie dies beispielsweise in Beuteln mit mehreren Kammern realisiert wird, oder durch eine zusätzliche Wirkstoff- und/oder Adjuvans-freie Gelschicht. In der Regel ist dies jedoch nicht erforderlich, und daher sind die in der Formulierung enthaltenen Phasen in einer bevozugten Ausführungsform nicht physikalisch (d.h. durch eine Trennwand, Trennfolie und dergleichen) getrennt.

Ein weiterer Gegenstand der Erfindung ist die Verwendung von erfindungsgemäßen Gelformulierungen, die wenigstens ein Pflanzenschutzmittel umfassen, zur Bekämpfung von Pflanzenpathogenen und/oder zur Bekämpfung von unerwünschtem Pflanzenwuchs.

Die Erfindung betrifft außerdem ein Verfahren zur Bekämpfung von Pflanzenpathogenen und/oder zur Bekämpfung von unerwünschtem Pflanzenwuchs, umfassend folgende Schritte:
- Bereitstellen einer erfindungsgemäßen Gelformulierung, die wenigstens ein Pflanzenschutzmittel umfasst;
- Zugabe wenigstens eines Salzes zu der Gelformulierung unter Erhalt einer Flüssigformulierung;
- Verdünnen der Flüssigformulierung mit Wasser unter Erhalt einer wässrigen Spritzbrühe; und
- Aufbringen der Spritzbrühe auf Pflanzen oder Pflanzenteile.

Bezüglich geeigneter und bevorzugter Pflanzenschutzmittel und Salze wird auf die obigen Ausführungen verwiesen. Geeignete zu bekämpfende Pflanzenpathogene und unerwünschter Pflanzenwuchs hängen vom einzelnen Pflanzenschutzmittel ab; Ziel-Pathogene und Ziel-Pflanzen im Zusammenhang mit den zu ihrer Bekämpfung eingesetzten Pflanzenschutzmittel sind dem Fachmann jeweils bekannt.

Durch die erfindungsgemäße Gelformulierung ist es möglich, Inkompatibilitätsprobleme von Stoffen beim gemeinsamen Formulieren zu vermeiden oder zumindest zu verringern. Damit können nun Stoffe gemeinsam formuliert werden, die bisher entweder völlig separat oder in nur begrenzten Mengen gemeinsam formuliert werden konnten. So können beispielsweise bei Pflanzenschutzformulierungen inkompatible Wirkstoffe oder inkompatible Wirkstoff/Adjuvans-Kombination gemeinsam formuliert werden. Außerdem können Adjuvantien in sehr hoher Konzentration eingesetzt werden, was die Wirksamkeit des Pflanzenschutzmittels signifikant erhöhen kann. Die Überführung in einen fließfähigen, dosierbaren und damit anwendungsfertigen Zustand erfolgt auf simple Art durch Elektrolytzusatz.

Die Erfindung wird nun durch die folgenden, nichtlimitierenden Beispiele veranschaulicht.

### Beispiele

### 1. Herstellung einer erfindungsgemäßen Gelformulierung

| Nr. | Komponente | Menge |
|---|---|---|
| 1 | Dimoxystrobin | 133 g |
| 2 | Epoxiconazol | 50 g |
| 3 | Lösungsmittel (Aromatengemisch; Naphtha) | 89 g |
| 4 | Adjuvans (C₁₆/C₁₈-Alkohol + 2-10 EO) | 133 g |
| 5 | Dispergiermittel I (Polyethylenglykol/Polypropylenglykol-Blockcopolymer | 20 g |
| 6 | Dispergiermittel II (Tristryrylphenolpolyglykolether) | 40 g |
| 7 | Antischaummittel (auf Silikonbasis) | 2 g |
| 8 | Frostschutzmittel (1,2-Propylenglykol) | 100 g |
| 9 | Verdicker (Synergen® Y 02 von Clariant) | 2 g |
| 10 | Biozid (Benzylisothiazolin-2-on/Methylisothiazolin-2-on) | 0,1 g |
| 11 | Wasser | ad 1 Liter |

Aus den Komponenten Nr. 1, 2, 5, 6, 7, 8, 10 und 11 (Wasser in einer Menge von 200 g) wurde eine Suspension angesetzt und dann mittels einer Perlmühle vermahlen (Partikelgröße: 70 % < 2 µm). Dann wurden 2 g des Verdickers eingerührt und man erhielt ein Gel (Gel1) mit einer Viskosität von > 5000 mPa·s.

Zu 190 g Wasser gab man 2 g Verdicker unter Erhalt eines hochviskosen Gels. In dieses Gel wurde dann in Lösungsmittel 3 gelöstes Adjuvans 4 eingerührt und man erhielt das Gel 2.

In drei Glasgefäßen wurde erst Gel 1 eingeführt und dann mit Gel 2 überschichtet, dann wurde die Partikelgröße analysiert (Probe 0). Ein Glasgefäß wurde bei Raumtemperatur (Probe 1), eins bei 40 °C (Probe 2) und eins bei 50 °C (Probe 3) gelagert. Nach zwei Wochen wurden alle drei Proben für einen Tag bei Raumtemperatur gelagert und anschließend auf Kristallbildung analysiert. Die Ergebnisse sind in nachfolgender Tabelle aufgeführt.

| Probe | Anteil Partikel < 2 µm [%] | d50 [µm] | d90 [µm] |
|---|---|---|---|
| Probe 0 | 72,0 | 1,4 | 3,0 |
| Probe 1 | 72,0 | 1,4 | 3,0 |
| Probe 2 | 72,0 | 1,4 | 3,1 |
| Probe 3 | 68,0 | 1,5 | 3,4 |

Wie die Ergebnisse zeigen, findet auch bei höheren Lagertemperaturen im Wesentlichen kein Kristallwachstum statt.

### 2. Herstellung einer einphasigen Gelformulierung (Vergleich)

| Nr. | Komponente | Menge |
|---|---|---|
| 1 | Dimoxystrobin | 133 g |
| 2 | Epoxiconazol | 50 g |
| 3 | Lösungsmittel (Aromatengemisch; Naphtha) | 89 g |
| 4 | Adjuvans (C₁₆/C₁₈-Alkohol + 2-10 EO) | 133 g |
| 5 | Dispergiermittel I (Polyethylenglykol/Polypropylenglykol-Blockcopolymer | 20 g |
| 6 | Dispergiermittel II (Tristryrylphenolpolyglykolether) | 40 g |
| 7 | Antischaummittel (auf Silikonbasis) | 2 g |
| 8 | Frostschutzmittel (1,2-Propylenglykol) | 100 g |
| 9 | Verdicker (Xanthan) | 2 g |
| 10 | Biozid (Benzylisothiazolin-2-on/Methylisothiazolin-2-on) | 0,1 g |
| 11 | Wasser | 490 g |

Aus den Komponenten Nr. 1, 2, 5, 6, 7, 8, 10 und 11 (Wasser in einer Menge von 390 g) wurde eine Suspension angesetzt und dann mittels einer Perlmühle vermahlen (Partikelgröße: 70 % < 2 µm). Dann wurde in Lösungsmittel 3 gelöstes Adjuvans 4 über eine Rotor-Stator-Mühle in die Suspension eingearbeitet und das Gemisch wurde mit Verdicker und Wasser (100 g) versetzt.

Das erhaltene Gel wurde in drei Glasgefäße eingeführt, dann wurde die Partikelgröße analysiert (Probe 0). Ein Glasgefäß wurde bei Raumtemperatur (Probe 1), eins bei 40 °C (Probe 2) und eins bei 50 °C (Probe 3) gelagert. Nach zwei Wochen wurden alle drei Proben für einen Tag bei Raumtemperatur gelagert und anschließend auf Kristallbildung analysiert. Die Ergebnisse sind in nachfolgender Tabelle aufgeführt.

| Probe | Anteil Partikel < 2 µm [%] | d50 [µm] | d90 [µm] |
|---|---|---|---|
| Probe 0 | 82,5 | 1,3 | 2,3 |
| Probe 1 | 58,7 | 1,8 | 3,6 |
| Probe 2 | 53,8 | 1,9 | 6,8 |
| Probe 3 | 46,9 | 2,1 | 11,9 |

Wie die Ergebnisse zeigen, findet ein signifikantes Kristallwachstum statt.

### 3. Herstellung einer einphasigen Gelformulierung (Vergleich)

| Nr. | Komponente | Menge |
|---|---|---|
| 1 | Dimoxystrobin | 133 g |
| 2 | Epoxiconazol | 50 g |
| 3 | Lösungsmittel (Aromatengemisch; Naphtha) | 89 g |
| 4 | Adjuvans (C₁₆/C₁₈-Alkohol + 2-10 EO) | 133 g |
| 5 | Dispergiermittel I (Polyethylenglykol/Polypropylenglykol-Blockcopolymer | 20 g |
| 6 | Dispergiermittel II (Tristryrylphenolpolyglykolether) | 40 g |
| 7 | Antischaummittel (auf Silikonbasis) | 2 g |
| 8 | Frostschutzmittel (1,2-Propylenglykol) | 100 g |
| 9 | Verdicker (Synergen® Y 02 von Clariant) | 2 g |
| 10 | Biozid (Benzylisothiazolin-2-on/Methylisothiazolin-2-on) | 0,1 g |
| 11 | Wasser | ad 1 Liter |

Aus den Komponenten Nr. 1, 2, 5, 6, 7, 8, 10 und 11 (Wasser in einer Menge von 390 g) wurde eine Suspension angesetzt und dann mittels einer Perlmühle vermahlen (Partikelgröße: 70 % < 2 µm). Dann wurde in Lösungsmittel 3 gelöstes Adjuvans 4 über eine Rotor-Stator-Mühle in die Suspension eingearbeitet und das Gemisch wurde mit Verdicker und Wasser (100 g) versetzt.

Das erhaltene Gel wurde in drei Glasgefäße eingeführt, dann wurde die Partikelgröße analysiert (Probe 0). Ein Glasgefäß wurde bei Raumtemperatur (Probe 1), eins bei 40 °C (Probe 2) und eins bei 50 °C (Probe 3) gelagert. Nach zwei Wochen wurden alle drei Proben für einen Tag bei Raumtemperatur gelagert und anschließend auf Kristallbildung analysiert. Die Ergebnisse sind in nachfolgender Tabelle aufgeführt.

| Probe | Anteil Partikel < 2 µm [%] | d50 [µm] | d90 [µm] |
|---|---|---|---|
| Probe 0 | 86,0 | 1,1 | 2,2 |
| Probe 1 | 67,0 | 1,3 | 7,5 |
| Probe 2 | 46,0 | 2,5 | 13,8 |
| Probe 3 | 35,5 | 5,0 | 22,0 |

## Patentansprüche

1. Lagerstabile Gelformulierung, umfassend wenigstens zwei im Wesentlichen unvermischte Hydrogele, enthaltend in jedem Hydrogel wenigstens einen elektrolytempfindlichen vollsynthetischen Verdicker, ferner enthaltend in einem der Hydrogele (Phase A) wenigstens einen Stoff A und in einem weiteren Hydrogel (Phase B) wenigstens einen Stoff B, wobei wenigstens einer der Stoffe A mit wenigstens einem der Stoffe B in den in der Gelformulierung jeweils enthaltenen Mengen nicht verträglich ist.

2. Gelformulierung nach Anspruch 1, wobei wenigstens einer der Stoffe A und/oder wenigstens einer der Stoffe B in Wasser schwerlöslich ist.

3. Gelformulierung nach einem der vorhergehenden Ansprüche, wobei wenigstens einer der Stoffe A die Präzipitation wenigstens eines der Stoffe B in einer wässrigen Dispersion, die 5 bis 100 Gew.-% Wasser enthält, fördert, und/oder wenigstens einer der Stoffe B die die Präzipitation wenigstens eines der Stoffe A in einer wässrigen Dispersion, die 5 bis 100 Gew.-% Wasser enthält, fördert.

4. Gelformulierung nach einem der vorhergehenden Ansprüche, wobei wenigstens einer der Stoffe A das Kristallwachstum (Ostwald Reifung) wenigstens eines der Stoffe B in einer wässrigen Dispersion, die 5 bis 100 Gew.-% Wasser enthält, fördert, und/oder wenigstens einer der Stoffe B das Kristallwachstum (Ostwald Reifung) wenigstens eines der Stoffe A in einer wässrigen Dispersion, die 5 bis 100 Gew.-% Wasser enthält, fördert.

5. Gelformulierung nach Anspruch 4, wobei wenigstens einer der Stoffe A die Wasserlöslichkeit wenigstens eines der Stoffe B heraufsetzt und/oder wenigstens einer der Stoffe B die Wasserlöslichkeit wenigstens eines der Stoffe A heraufsetzt.

6. Gelformulierung nach einem der vorhergehenden Ansprüche, wobei die wenigstens zwei Hydrogele eine Viskosität von jeweils wenigstens 1000 mPas besitzen.

7. Gelformulierung nach einem der vorhergehenden Ansprüche, wobei die wenigstens zwei Hydrogele wenigstens eine gemeinsame Phasengrenzfläche besitzen.

8. Gelformulierung nach einem der vorhergehenden Ansprüche, wobei der wenigstens eine elektrolytempfindliche vollsynthetische Verdicker ausgewählt ist unter Polyacrylsäuren und/oder Polyacrylaten mit einem zahlenmittleren Molekulargewicht von 1·10³ bis 1·10⁹, Homo- oder Copolymeren von Acrylamid und/oder Methacrylamid mit einem zahlenmittleren Molekulargewicht von 1·10³ bis 1·10⁹ und Ethylen/Maleinsäureanhydrid-Copolymeren mit einem zahlenmittleren Molekulargewicht von 1·10³ bis 1·10⁹.

9. Gelformulierung nach Anspruch 8, wobei der wenigstens eine elektrolytempfindliche vollsynthetische Verdicker ausgewählt ist unter Homo- oder Copolymeren von Acrylamid und/oder Methacrylamid mit einem zahlenmittleren Molekulargewicht von 1·10³ bis 1·10⁹.

10. Gelformulierung nach Anspruch 9, wobei der wenigstens eine elektrolytempfindliche vollsynthetische Verdicker ausgewählt ist unter Copolymeren auf Basis von 2-Acrylamido-2-methyl-1-propansulfonsäure und Makromonomeren.

11. Gelformulierung nach einem der Ansprüche 9 oder 10, wobei der wenigstens eine elektrolytempfindliche vollsynthetische Verdicker ausgewählt ist unter Copolymeren von
(a) 2-Acrylamido-2-methyl-1-propansulfonsäure und/oder Salzen davon mit
(b) wenigstens einem olefinisch ungesättigten, nicht kationischen, gegebenenfalls vernetzenden, gegebenenfalls thermosensitiven Comonomer, das wenigstens ein Sauerstoff-, Stickstoff-, Schwefel- oder Phosphoratom aufweist und ein Molekulargewicht von höchsten 500 besitzt; und/oder
(c) wenigstens einem olefinisch ungesättigten, kationischen Comonomer, das wenigstens ein Sauerstoff-, Stickstoff-, Schwefel- oder Phosphoratom aufweist und ein Molekulargewicht von höchsten 500 besitzt; und/oder
(d) wenigstens einem olefinisch ungesättigten siliziumhaltigen Comonomer; und/oder
(e) wenigstens einem olefinisch ungesättigten fluorhaltigen Comonomer; und/oder
(f) wenigstens einem, gegebenenfalls thermosensitiven, Makromer, das ein zahlenmittleren Molekulargewicht von wenigstens 200 besitzt; und/oder
(g) wenigstens einem polymeren Additiv mit einem zahlenmittleren Molekulargewicht von 200 bis 1·10⁹.

12. Gelformulierung nach einem der vorhergehenden Ansprüche, wobei Phase A wenigstens ein im Wesentlichen wasserunlösliches Pflanzenschutzmittel und gegebenenfalls wenigstens ein Dispergiermittel enthält.

13. Gelformulierung nach Anspruch 12, wobei Phase B ein vom Pflanzenschutzmittel der Phase A verschiedenes Pflanzenschutzmittel und/oder ein Adjuvans enthält.

14. Verfahren zur Herstellung der Gelformulierung gemäß der Definition in einem der vorhergehenden Ansprüche, umfassend folgende Schritte:
(i) Herstellen eines formstabilen Gels, das wenigstens einen Stoff A, ein Dispergiermedium für den wenigstens einen Stoff A und wenigstens einen elektrolytempfindlichen vollsynthetischen Verdicker umfasst;
(ii) Herstellen eines formstabilen Gels, das wenigstens einen Stoff B, ein Dispergiermedium für den wenigstens einen Stoff B und wenigstens einen elektrolytempfindlichen vollsynthetischen Verdicker umfasst;
(iii) gegebenenfalls Herstellen eines formstabilen Gels, das wenigstens einen Stoff C, ein Dispergiermedium für den wenigstens einen Stoff C und wenigstens einen elektrolytempfindlichen vollsynthetischen Verdicker umfasst, wobei der wenigstens eine Stoff C wenigstens einer der Stoffe A, wenigstens einer der Stoffe B oder ein von diesen verschiedener Stoff ist;
(iv) gegebenenfalls ein- oder mehrfaches Wiederholen des Schritts (iii); und
(v) Anordnen der in den Schritten (i), (ii), gegebenenfalls (iii) und gegebenenfalls (iv) erhaltenen Gele in einem Gefäß.

15. Verwendung von Gelformulierungen nach einem der Ansprüche 12 oder 13 zur Bekämpfung von Pflanzenpathogenen und/oder zur Bekämpfung von unerwünschtem Pflanzenwuchs.

16. Verfahren zur Bekämpfung von Pflanzenpathogenen und/oder zur Bekämpfung von unerwünschtem Pflanzenwuchs, umfassend folgende Schritte:
- Bereitstellen einer Gelformulierung nach einem der Ansprüche 12 oder 13;
- Zugabe wenigstens eines Salzes zu der Gelformulierung unter Erhalt einer Flüssigformulierung;
- Verdünnen der Flüssigformulierung mit Wasser unter Erhalt einer wässrigen Spritzbrühe; und
- Aufbringen der Spritzbrühe auf Pflanzen oder Pflanzenteile.

## Claims

1. A storage-stable gel formulation, including at least two essentially unmixed hydrogels, comprising in each hydrogel at least one electrolyte-sensitive, completely synthetic, thickener and furthermore comprising in one of the hydrogels (phase A) at least one substance A and in an additional hydrogel (phase B) at least one substance B, at least one of the substances A being incompatible with at least one of the substances B in the amounts respectively present in the gel formulation.

2. The gel formulation according to claim 1, wherein at least one of the substances A and/or at least one of the substances B is sparingly soluble in water.

3. The gel formulation according to either of the preceding claims, wherein at least one of the substances A promotes the precipitation of at least one of the substances B in an aqueous dispersion comprising from 5 to 100% by weight of water and/or at least one of the substances B promotes the precipitation of at least one of the substances A in an aqueous dispersion comprising from 5 to 100% by weight of water.

4. The gel formulation according to any of the preceding claims, wherein at least one of the substances A promotes the crystal growth (Ostwald ripening) of at least one of the substances B in an aqueous dispersion comprising from 5 to 100% by weight of water and/or at least one of the substances B promotes the crystal growth (Ostwald ripening) of at least one of the substances A in an aqueous dispersion comprising from 5 to 100% by weight of water.

5. The gel formulation according to claim 4, wherein at least one of the substances A increases the solubility in water of at least one of the substances B and/or at least one of the substances B increases the solubility in water of at least one of the substances A.

6. The gel formulation according to any of the preceding claims, wherein the at least two hydrogels each have a viscosity of at least 1000 mPa·s.

7. The gel formulation according to any of the preceding claims, wherein the at least two hydrogels have at least one common interface.

8. The gel formulation according to any of the preceding claims, wherein the at least one electrolyte-sensitive, completely synthetic, thickener is chosen from polyacrylic acids and/or polyacrylates with a number-average molecular weight of 1 × 10³ to 1 × 10⁹, homo- or copolymers of acrylamide and/or methacrylamide with a number-average molecular weight of 1 × 10³ to 1 × 10⁹ and ethylene/maleic anhydride copolymers with a number-average molecular weight of 1 × 10³ to 1 × 10⁹.

9. The gel formulation according to claim 8, wherein the at least one electrolyte-sensitive, completely synthetic, thickener is chosen from homo- or copolymers of acrylamide and/or methacrylamide with a number-average molecular weight of 1 × 10³ to 1 × 10⁹.

10. The gel formulation according to claim 9, wherein the at least one electrolyte-sensitive, completely synthetic, thickener is chosen from copolymers based on 2-acrylamido-2-methyl-1-propanesulfonic acid and macromonomers.

11. The gel formulation according to either of claims 9 and 10, wherein the at least one electrolyte-sensitive, completely synthetic, thickener is chosen from copolymers of
(a) 2-acrylamido-2-methyl-1-propanesulfonic acid and/or salts thereof with
(b) at least one olefinically unsaturated, noncationic, optionally crosslinking and optionally heat-sensitive comonomer exhibiting at least one oxygen, nitrogen, sulfur or phosphorus atom and having a molecular weight of at most 500; and/or
(c) at least one olefinically unsaturated cationic comonomer exhibiting at least one oxygen, nitrogen, sulfur or phosphorus atom and having a molecular weight of at most 500; and/or
(d) at least one olefinically unsaturated silicon-comprising comonomer; and/or
(e) at least one olefinically unsaturated fluorine-comprising comonomer; and/or
(f) at least one optionally heat-sensitive macromer having a number-average molecular weight of at least 200; and/or
(g) at least one polymer additive with a number-average molecular weight of 200 to 1 × 10⁹.

12. The gel formulation according to any of the preceding claims, wherein phase A comprises at least one plant protection agent which is essentially insoluble in water and optionally at least one dispersing agent.

13. The gel formulation according to claim 12, wherein phase B comprises a plant protection agent which is different from the plant protection agent of phase A and/or an adjuvant.

14. A process for the preparation of the gel formulation according to the definition in any of the preceding claims including the following steps:
(i) preparation of a dimensionally stable gel including at least one substance A, a dispersing medium for the at least one substance A and at least one electrolyte-sensitive, completely synthetic, thickener;
(ii) preparation of a dimensionally stable gel including at least one substance B, a dispersing medium for the at least one substance B and at least one electrolyte-sensitive, completely synthetic, thickener;
(iii) optionally preparation of a dimensionally stable gel including at least one substance C, a dispersing medium for the at least one substance C and at least one electrolyte-sensitive, completely synthetic, thickener, the at least one substance C being at least one of the substances A, at least one of the substances B or a substance other than these;
(iv) optionally one or more repetitions of step (iii); and
(v) arrangement in a container of the gels obtained in steps (i), (ii), optionally (iii) and optionally (iv).

15. The use of gel formulations according to either of claims 12 and 13 for combating plant pathogens and/or for combating undesirable plant growth.

16. A method for combating plant pathogens and/or for combating undesirable plant growth comprising the following steps:
- making available a gel formulation according to either of claims 12 and 13;
- adding at least one salt to the gel formulation to produce a liquid formulation;
- diluting the liquid formulation with water to produce an aqueous spray slurry; and
- applying the spray slurry to plants or plant parts.

## Revendications

1. Formulation de gel stable au stockage, comprenant au moins deux hydrogels essentiellement non mélangés, contenant dans chaque hydrogel au moins un épaississant entièrement synthétique sensible aux électrolytes, contenant en outre dans un des hydrogels (phase A) au moins une substance A et dans un autre hydrogel (phase B) au moins une substance B, au moins une des substances A n'étant pas compatible avec au moins une des substances B en les quantités respectivement contenues dans la formulation de gel.

2. Formulation de gel selon la revendication 1, dans laquelle au moins une des substances A et/ou au moins une des substances B sont difficilement solubles dans l'eau.

3. Formulation de gel selon l'une quelconque des revendications précédentes, dans laquelle au moins une des substances A favorise la précipitation d'au moins une des substances B dans une dispersion aqueuse qui contient 5 à 100 % en poids d'eau, et/ou au moins une des substances B favorise la précipitation d'au moins une des substances A dans une dispersion aqueuse qui contient 5 à 100 % en poids d'eau.

4. Formulation de gel selon l'une quelconque des revendications précédentes, dans laquelle au moins une des substances A favorise la croissance des cristaux (mûrissement d'Ostwald) d'au moins une des substances B dans une dispersion aqueuse qui contient 5 à 100 % en poids d'eau, et/ou au moins une des substances B favorise la croissance des cristaux (mûrissement d'Ostwald) d'au moins une des substances A dans une dispersion aqueuse qui contient 5 à 100 % en poids d'eau.

5. Formulation de gel selon la revendication 4, dans laquelle au moins une des substances A augmente la solubilité dans l'eau d'au moins une des substances B et/ou au moins une des substances B augmente la solubilité dans l'eau d'au moins une des substances A.

6. Formulation de gel selon l'une quelconque des revendications précédentes, dans laquelle lesdits au moins deux hydrogels présentent chacun une viscosité d'au moins 1 000 mPas.

7. Formulation de gel selon l'une quelconque des revendications précédentes, dans laquelle lesdits au moins deux hydrogels présentent au moins une interface de phases commune.

8. Formulation de gel selon l'une quelconque des revendications précédentes, dans laquelle ledit au moins un épaississant entièrement synthétique sensible aux électrolytes est choisi parmi les acides polyacryliques et/ou les polyacrylates ayant un poids moléculaire moyen en nombre de 1·10³ à 1·10⁹, les homo-ou copolymères d'acrylamide et/ou de méthacrylamide ayant un poids moléculaire moyen en nombre de 1·10³ à 1·10⁹, et les copolymères d'éthylène/anhydride de l'acide maléique ayant un poids moléculaire moyen en nombre de 1·10³ à 1·10⁹.

9. Formulation de gel selon la revendication 8, dans laquelle ledit au moins un épaississant entièrement synthétique sensible aux électrolytes est choisi parmi les homo- ou copolymères d'acrylamide et/ou de méthacrylamide ayant un poids moléculaire moyen en nombre de 1·10³ à 1·10⁹.

10. Formulation de gel selon la revendication 9, dans laquelle ledit au moins un épaississant entièrement synthétique sensible aux électrolytes est choisi parmi les copolymères à base d'acide 2-acrylamido-2-méthyl-1-propanesulfonique et de macromonomères.

11. Formulation de gel selon l'une quelconque des revendications 9 ou 10, dans lequel ledit au moins un épaississant entièrement synthétique sensible aux électrolytes est choisi parmi les copolymères de
(a) acide 2-acrylamido-2-méthyl-1-propanesulfonique et/ou ses sels avec
(b) au moins un comonomère oléfiniquement insaturé, non cationique, éventuellement réticulant, éventuellement thermosensible, qui comprend au moins un atome d'oxygène, d'azote, de soufre ou de phosphore, et présente un poids moléculaire d'au plus 500 ; et/ou
(c) au moins un comonomère oléfiniquement insaturé, cationique, qui comprend au moins un atome d'oxygène, d'azote, de soufre ou de phosphore, et présente un poids moléculaire d'au plus 500 ; et/ou
(d) au moins un comonomère oléfiniquement insaturé contenant du silicium ; et/ou
(e) au moins un comonomère oléfiniquement insaturé contenant du fluor ; et/ou
(f) au moins un macromère, éventuellement thermosensible, qui présente un poids moléculaire moyen en nombre d'au moins 200 ; et/ou
(g) au moins un additif polymère ayant un poids moléculaire moyen en nombre de 200 à 1·10⁹.

12. Formulation de gel selon l'une quelconque des revendications précédentes, dans laquelle la phase A contient au moins un agent phytoprotecteur essentiellement insoluble dans l'eau et éventuellement au moins un dispersant.

13. Formulation de gel selon la revendication 12, dans laquelle la phase B contient un agent phytoprotecteur différent de l'agent phytoprotecteur de la phase A et/ou un adjuvant.

14. Procédé de fabrication de la formulation de gel selon la définition dans l'une quelconque des revendications précédentes, comprenant les étapes suivantes :
(i) la fabrication d'un gel de forme stable, qui comprend au moins une substance A, un milieu de dispersion pour ladite au moins une substance A et au moins un épaississant entièrement synthétique sensible aux électrolytes ;
(ii) la fabrication d'un gel de forme stable, qui comprend au moins une substance B, un milieu de dispersion pour ladite au moins une substance B et au moins un épaississant entièrement synthétique sensible aux électrolytes ;
(iii) éventuellement la fabrication d'un gel de forme stable, qui comprend au moins une substance C, un milieu de dispersion pour ladite au moins une substance C et au moins un épaississant entièrement synthétique sensible aux électrolytes ;
ladite au moins une substance C étant au moins une des substances A, au moins une des substances B ou une substance différente de celles-ci ;
(iv) éventuellement la répétition à une ou plusieurs reprises de l'étape (iii) ; et
(v) l'agencement des gels obtenus aux étapes (i), (ii), éventuellement (iii) et éventuellement (iv) dans un récipient.

15. Utilisation de formulations de gel selon l'une quelconque des revendications 12 ou 13 pour lutter contre des pathogènes de plantes et/ou pour lutter contre une végétation indésirable.

16. Procédé de lutte contre des pathogènes de plantes et/ou de lutte contre une végétation indésirable, comprenant les étapes suivantes :
- la préparation d'une formulation de gel selon l'une quelconque des revendications 12 ou 13 ;
- l'ajout d'au moins un sel à la formulation de gel pour obtenir une formulation liquide ;
- la dilution de la formulation liquide avec de l'eau pour obtenir une bouillie de pulvérisation aqueuse ; et
- l'application de la bouillie de pulvérisation sur des plantes ou des parties de plantes.
